# EUROPÄISCHE PATENTSCHRIFT

(11) **EP 3 789 670 B1**
(45) Veröffentlichungstag und Bekanntmachung des Hinweises auf die Patenterteilung: **26.05.2021**
(21) Anmeldenummer: 19195118.5
(22) Anmeldetag: 03.09.2019
(51) Int. Cl.: F23B 30/00, F23B 10/00, F23B 10/02, F23B 60/02, F23G 5/24, F23H 9/00, F23H 13/06

(54) **BIOMASSE-HEIZANLAGE, SOWIE DEREN BESTANDTEILE**
BIOMASS HEATING SYSTEM AND COMPONENTS OF SAME
INSTALLATION DE CHAUFFAGE À LA BIOMASSE AINSI QUE SES PARTIES INTÉGRANTES

(43) Veröffentlichungstag der Anmeldung: 10.03.2021
(73) Patentinhaber: SL-Technik GmbH, 5120 St. Pantaleon (AT)
(72) Erfinder: SOMMERAUER, Thilo, 5120 St. Pantaleon (AT)
(74) Vertreter: Kuhnen & Wacker Patent- und Rechtsanwaltsbüro PartG mbB

(56) Entgegenhaltungen:
- AT-U1- 6 972
- CN-A- 108 826 310
- US-A- 2 933 057

## Beschreibung

### TECHNISCHES GEBIET

Die Erfindung betrifft eine Biomasse-Heizanlage, sowie deren Bestandteile.

### STAND DER TECHNIK

Biomasse-Heizanlagen in einem Leistungsbereich von 20 bis 500 kW sind bekannt. Biomasse kann als ein günstiger, heimischer, krisensicherer und umweltfreundlicher Brennstoff angesehen werden. Als verfeuerbare Biomasse gibt es beispielsweise Hackgut oder Pellets. Biomasse-Heizanlagen aus dem Stand der Technik sind beispielsweise bekannt aus den Schriften AT 6972 U1, CN 108826310 A und US 2933057 A.

Die Pellets bestehen meistens aus Holzspänen, Sägespänen, Biomasse oder anderen Materialien, die in kleine Scheiben oder Zylinder mit einem Durchmesser von ca. 3 bis 15 mm und einer Länge von 5 bis 30 mm verdichtet worden sind. Hackgut (auch als Holzschnitzel, Holzhackschnitzel oder Hackschnitzel bezeichnet) ist mit schneidenden Werkzeugen zerkleinertes Holz.

Biomasse-Heizanlagen für Brennstoff in Form von Pellets und Hackgut weisen im Wesentlichen einen Kessel mit einer Brennkammer (der Verbrennungsraum) und mit einer daran anschließenden Wärmetauschvorrichtung auf. Aufgrund in vielen Ländern verschärfter gesetzlicher Vorschriften weisen einige Biomasse-Heizanlagen auch einen Feinstaubfilter auf. Regelmäßig ist weiteres verschiedenes Zubehör vorhanden, wie beispielsweise Regelungseinrichtungen, Sonden, Sicherheitsthermostate, Druckschalter, eine Abgasrückführung und ein separater Brennstoffbehälter.

Bei der Brennkammer sind regelmäßig eine Einrichtung zur Zuführung von Brennstoff, eine Einrichtung für die Zufuhr der Luft und eine Zündvorrichtung für den Brennstoff vorgesehen. Die Einrichtung zur Zufuhr der Luft weist wiederum normalerweise ein Hochleistungsgebläse mit niedrigem Druck auf, um die thermodynamischen Faktoren bei der Verbrennung in der Brennkammer vorteilhaft zu beeinflussen. Eine Einrichtung zur Zuführung von Brennstoff kann beispielsweise mit einem seitlichen Einschub vorgesehen sein (sog. Quereinschubfeuerung). Dabei wird der Brennstoff von der Seite über eine Schnecke oder einen Kolben in die Brennkammer eingeschoben.

In der Brennkammer ist weiter üblicherweise ein Feuerungsrost vorgesehen, auf welchem kontinuierlich der Brennstoff im Wesentlichen zugeführt und verbrannt wird. Dieser Feuerungsrost lagert den Brennstoff für die Verbrennung und weist Öffnungen, beispielsweise Schlitze, auf, die den Durchgang eines Teils der Verbrennungsluft als Primärluft zu dem Brennstoff erlauben. Weiter kann der Rost starr oder beweglich ausgeführt sein.

Beim Durchströmen des Rosts mit der Primärluft wird unter anderem auch der Rost gekühlt, wodurch das Material geschont wird. Zudem kann es bei unzureichender Luftzuführung auf dem Rost zu Schlackenbildung kommen. Insbesondere Feuerungen, die mit unterschiedlichen Brennstoffen beschickt werden sollen, womit sich die vorliegende Offenbarung insbesondere beschäftigt, weisen die inhärente Problematik auf, dass die unterschiedlichen Brennstoffe unterschiedliche Ascheschmelzpunkte, Wassergehalte und unterschiedliches Brennverhalten aufweisen. Damit ist es problematisch eine Heizanlage vorzusehen, die für unterschiedliche Brennstoffe gleichermaßen gut geeignet ist. Die Brennkammer kann weiterhin regelmäßig in eine Primärverbrennungszone (unmittelbare Verbrennung des Brennstoffes auf dem Rost) und eine Sekundärverbrennungszone (Nachverbrennung des Rauchgases) eingeteilt werden. In der Brennkammer erfolgt die Trocknung, pyrolytische Zersetzung sowie die Vergasung des Brennstoffes. Um die entstehenden brennbaren Gase vollständig zu verbrennen wird zudem eine Sekundärluft vor den Eintritt in eine Sekundärverbrennungszone eingebracht.

Die Verbrennung der Pellets oder des Hackguts weist nach der Trocknung im Wesentlichen zwei Phasen auf. In der ersten Phase wird der Brennstoff durch hohe Temperaturen und Luft, die in die Brennkammer eingeblasen werden kann, und zumindest teilweise pyrolytisch zersetzt und in Gas umgewandelt, In der zweiten Phase treten die Verbrennung des in Gas umgewandelten Teils sowie die Verbrennung der eventuell vorhandenen restlichen Feststoffe ein. Insofern gast der Brennstoff aus, und das entstandene Gas wird mitverbrannt.

Unter Pyrolyse versteht man die thermische Zersetzung eines festen Stoffes unter Sauerstoffabschluss. Die Pyrolyse lässt sich in die primäre und sekundäre Pyrolyse aufteilen. Die Produkte der primären Pyrolyse sind Pyrolysekoks und Pyrolysegase, wobei sich die Pyrolysegase in bei Raumtemperatur kondensierbare und nicht kondensierbare Gase unterteilen lassen. Die primäre Pyrolyse findet bei grob 250-450°C und die sekundäre Pyrolyse bei ungefähr 450-600°C statt. Die in weiterer Folge auftretende sekundäre Pyrolyse basiert auf der Weiterreaktion der primär gebildeten Pyrolyseprodukte. Die Trocknung und Pyrolyse finden zumindest weitgehend ohne den Einsatz von Luft statt, da flüchtige CH - Verbindungen vom Partikel austreten und daher keine Luft an die Partikeloberfläche gelangt. Die Vergasung kann als Teil der Oxidation gesehen werden; es werden die bei der pyrolytischen Zersetzung entstandenen festen, flüssigen und gasförmigen Produkte durch weitere Wärmeeinwirkung in Reaktion gebracht. Dies geschieht unter Zugabe eines Vergasungsmittels wie Luft, Sauerstoff oder auch Wasserdampf. Der Lambda-Wert bei der Vergasung ist größer als null und kleiner als eins. Die Vergasung findet bei rund 300 bis 850°C statt. Oberhalb von ungefähr 850°C findet die vollständige Oxidation mit Luftüberschuss (Lambda größer 1) statt. Die Reaktionsendprodukte sind im Wesentlichen Kohlendioxid, Wasserdampf und Asche. Bei allen Phasen sind die Grenzen nicht starr, sondern fließend. Mittels einer am Abgasausgang des Kessels vorgesehenen Lamdasonde kann der Verbrennungsprozess vorteilhaft geregelt werden.

Allgemein ausgedrückt wird der Wirkungsgrad der Verbrennung durch die Umwandlung der Pellets in Gas erhöht, weil gasförmiger Brennstoff mit der Verbrennungsluft besser vermischt wird, und eine geringere Emission von Schadstoffen, weniger unverbrannte Partikel und Asche erzeugt werden.

Bei der Verbrennung von Biomasse entstehen luftgetragene Verbrennungsprodukte, deren Hauptbestandteile Kohlenstoff, Wasserstoff und Sauerstoff sind. Diese können in Emissionen aus vollständiger Oxidation, aus unvollständiger Oxidation und Stoffen aus Spurenelementen bzw. Verunreinigungen unterschieden werden. Bei den Emissionen aus vollständiger Oxidation handelt es sich im Wesentlichen um Kohlenstoffdioxid (CO₂) und Wasserdampf (H₂O). Die Bildung von Kohlenstoffdioxid aus dem Kohlenstoff der Biomasse ist das Ziel der Verbrennung, da so die freigesetzte Energie genutzt werden kann. Die Freisetzung von Kohlenstoffdioxid (CO₂) verhält sich weitgehend proportional zum Kohlenstoffgehalt der verbrannten Brennstoffmenge; somit ist der Kohlenstoffdioxid auch abhängig von der bereitzustellenden Nutzenergie. Eine Reduzierung kann im Wesentlichen nur durch eine Verbesserung des Wirkungsgrades erzielt werden.

Allerdings sind die vorstehend beschriebenen komplexen Verbrennungsvorgänge nicht einfach zu beherrschen. So besteht ganz allgemein formuliert ein Verbesserungsbedarf betreffend der Verbrennungsvorgänge in Biomasse-Heizanlagen.

Betreffend die Luftzufuhr in die Brennkammer sind weiterhin Abgasrückführungseinrichtungen bekannt, die Abgas aus der Brennkammer zur erneuten Verbrennung in die Brennkammer zurückführen. Hierbei existieren im Stand der Technik üblicherweise Öffnungen in der Brennkammer zur Zufuhr von Primärluft durch eine die Brennkammer speisende Primärluftleitung, und weiterhin existieren Umfangsöffnungen in der Brennkammer zur Zufuhr von Sekundärluft aus einer Sekundärluftleitung.

Das Abgas der Verbrennung in der Brennkammer wird dem Wärmetauscher zugeführt, so dass die heißen Verbrennungsgase durch den Wärmetauscher strömen, um Wärme auf ein Wärmetauschmedium zu übertragen, bei dem es sich normalerweise um Wasser bis etwa 80°C handelt.

Bei der Zündvorrichtung handelt es sich meistens um eine Heißlufteinrichtung oder eine Glüheinrichtung. Im ersten Fall wird die Verbrennung in Gang gesetzt, indem der Brennkammer Heißluft zugeführt wird, wobei die Heißluft durch einen elektrischen Widerstand aufgeheizt wird. Im zweiten Fall weist die Zündvorrichtung eine Glühkerze / einen Glühstab oder mehrere Glühkerzen auf, um die Pellets oder das Hackgut durch direkten Kontakt zu erhitzen, bis die Verbrennung beginnt. Die Glühkerzen können auch mit einem Motor versehen sein, um während der Zündphase mit den Pellets oder dem Hackgut in Berührung zu bleiben, und dann zurückzufahren, um nicht den Flammen ausgesetzt zu bleiben. Diese Lösung ist verschleißanfällig und aufwändig.

Grundsätzlich bestehen bei herkömmlichen Biomasse-Heizanlagen die Probleme, dass die gasförmigen oder festen Emissionen zu hoch sind, dass der Wirkungsgrad zu niedrig ist und dass die Staubemissionen zu hoch sind. Problematisch ist weiter die variierende Qualität des Brennstoffs, aufgrund des variierenden Wassergehalts des Brennstoffs, womit ein gleichmäßiger Abbrand des Brennstoffs mit niedriger Emission erschwert wird. Insbesondere bei Biomasse-Heizanlagen, welche für verschiedene Arten von biologischem Brennstoff tauglich sein sollen, erschwert es die variierende Qualität und Konsistenz des Brennstoffs, eine durchgängig hohe Effizienz der Biomasse-Heizanlage aufrechtzuerhalten. Diesbezüglich besteht erheblicher Optimierungsbedarf.

Ein Nachteil der herkömmlichen Biomasse-Heizanlagen für Pellets kann darin bestehen, dass Pellets, die in die Brennkammer fallen, aus dem Gitter bzw. Rost herausrollen bzw. herausrutschen können und in einen Bereich der Brennkammer gelangen können, in dem die Temperatur niedriger ist oder in dem die Luftzufuhr schlecht ist, oder sie können sogar in die unterste Kammer des Kessels fallen. Pellets, die nicht auf dem Gitter bzw. Rost verbleiben, verbrennen unvollständig und verursachen dadurch einen schlechten Wirkungsgrad, übermäßige Asche und eine bestimmte Menge an unverbrannten Schadstoffpartikeln.

Aus diesem Grund besitzen die bekannten Biomasse-Heizanlagen für Pellets in der Nähe des Gitters bzw. Rostes und/oder des Austritts des Verbrennungsgases beispielsweise Prallbleche, um Brennstoffelemente an bestimmten Orten zurückzuhalten. Bei manchen Kesseln sind an der Innenseite der Brennkammer Absätze vorgesehen, um zu verhindern, dass Pellets in die Kammer des Kessels hineinfallen. In diesen Prallblechen und Absätzen können sich jedoch wiederum Verbrennungsrückstände festsetzen, was die Reinigung erschwert und Luftströmungen in der Brennkammer behindern kann, was wiederum die Effizienz mindert. Zudem erfordern diese Prallbleche einen eigenen Herstellungs- und Montageaufwand.

Biomasse-Heizanlagen für Pellets oder Hackgut weisen die folgenden weiteren Nachteile und Probleme auf.

Ein Problem besteht in der nicht gleichmäßigen Verteilung der Pellets in der Brennkammer und insbesondere auf dem Gitter bzw. Rost, wodurch der Wirkungsgrad der Verbrennung verringert und die Emission von Schadstoffen erhöht wird. Durch diesen Nachteil kann auch die Zündung behindert werden, wenn sich ein Bereich ohne Brennstoff in der Nähe der Zündvorrichtung befindet.

Prallbleche oder Absätze in der Brennkammer können diesen Nachteil begrenzen und vermeiden, dass der Brennstoff aus dem Gitter bzw. Rost herausrollt bzw. herausrutscht oder sogar in die Kammer des Kessels hineinfällt, doch sie behindern die Luftströmungen und verhindern eine optimale Mischung von Luft und Brennstoff.

Ein weiteres Problem besteht darin, dass eine unvollständige Verbrennung infolge der nicht gleichmäßigen Verteilung des Brennstoffes auf dem Gitter bzw. Rost und infolge der nicht optimalen Mischung von Luft und Brennstoff die Anhäufung und das Herabfallen von unverbrannter Asche durch die Lufteintrittsöffnungen, die direkt auf den Verbrennungsrost führen, in die Luftkanäle begünstigt.

Dies ist besonders störend und verursacht häufige Unterbrechungen, um Wartungsarbeiten wie Reinigen durchzuführen. Aus allen diesen Gründen wird in der Brennkammer normalerweise ein großer Luftüberschuss aufrechterhalten, doch dadurch nehmen die Flammentemperatur und der Wirkungsgrad der Verbrennung ab, und es kommt zu hohen NOx-Emissionen.

Der Einsatz eines Gebläses mit niedriger Druckhöhe liefert keine geeignete Wirbelströmung der Luft in der Brennkammer und ermöglicht deshalb auch keine optimale Mischung von Luft und Brennstoff. Generell ist es schwierig, in herkömmlichen Brennkammern eine optimale Wirbelströmung auszubilden.

Ein weiteres Problem bei den bekannten Brennern besteht noch darin, dass die beiden Phasen, Umwandlung der Pellets in Gas und Verbrennung, mittels der gleichen Luftmenge gleichzeitig in der gesamten Brennkammer stattfinden, womit die Effizienz gesenkt wird.

Schließlich existieren einige Nachteile in Bezug auf die Zündvorrichtungen. Heißluftvorrichtungen benötigen eine hohe elektrische Leistung und verursachen hohe Kosten. Zündkerzen benötigen weniger Strom, doch sie benötigen bewegliche Teile, da die Zündkerzen motorisiert sein müssen. Sie sind teuer, kompliziert und können bezüglich Zuverlässigkeit ein Problem darstellen.

Weiter besteht insbesondere auch bei den Wärmetauschern von Biomasse-Heizanlagen des Stands der Technik Optimierungsbedarf, d.h., deren Effizienz könnte gesteigert werden. Ebenso besteht Verbesserungsbedarf betreffend der oft umständlichen und ineffizienten Abreinigung von herkömmlichen Wärmetauschern.

Das gleiche gilt für die üblichen Elektrofilter von Biomasse-Heizanlagen. Deren Elektrode setzt sich regelmäßig mit Verbrennungsrückständen zu, was die Ausbildung des elektrischen Feldes zur Filterung verschlechtert und die Effizienz der Filterung verringert.

Es kann eine Aufgabe der Erfindung sein, eine Biomasse-Heizanlage in Hybridtechnologie vorzusehen, welche emissionsarm (v.a. Feinstaub, CO, Kohlenwasserstoffe, NOx) ist, welche brennstoffflexibel mit Hackgut und Pellets betrieben werden kann, und welche einen hohen Wirkungsgrad aufweist.

Dabei können erfindungsgemäß und ergänzend folgende Überlegungen eine Rolle spielen:
Die Hybridtechnologie soll sowohl den Einsatz von Pellets als auch von Hackgut mit Wassergehalten zwischen 8 und 35 Gewichtsprozent ermöglichen.

Möglichst niedrige gasförmige Emissionen (kleiner als 50 oder 100 mg/Nm³ bezogen auf trockenes Rauchgas und 13 Volumenprozent O₂) sollen erzielt werden.

Sehr niedrige Staubemissionen kleiner 15 mg mg/Nm³ ohne und kleiner 5 mg mg/Nm³ mit Elektrofilterbetrieb werden angestrebt.

Ein hoher Wirkungsgrad von bis zu 95% soll erreicht werden.

Weiter kann man berücksichtigen, dass der Betrieb der Anlage optimiert sein soll. Beispielsweise soll eine einfache Entaschung, einfache Reinigung oder eine einfache Wartung ermöglicht werden.

Zudem sollte eine hohe Anlagenverfügbarkeit vorhanden sein.

Dabei kann/können sich die vorstehend genannte Aufgabe oder die potentiellen Teilaufgaben auch auf einzelne Teilaspekte der Gesamtanlage beziehen, beispielsweise auf die Brennkammer, den Wärmetauscher oder den Feinstaubfilter.

Diese Aufgabe(n) wird/werden durch die Gegenstände der unabhängigen Ansprüche gelöst. Weitere Aspekte und vorteilhafte Weiterbildungen sind Gegenstand der abhängigen Ansprüche.

Gemäß einem Aspekt der vorliegenden Erfindung ist eine Biomasse-Heizanlage zur Verfeuerung von Brennstoff in Form von Pellets und/oder Hackgut vorgesehen, welche das Folgende aufweist: einen Kessel mit einer Brenneinrichtung, einen Wärmetauscher mit einer, vorzugsweise bündelartig angeordneten, Mehrzahl von Kesselrohren, wobei die Brenneinrichtung das Folgende aufweist: eine Brennkammer mit einem Drehrost und mit einer Primärverbrennungszone und mit einer, bevorzugt über der Primärverbrennungszone vorgesehenen, Sekundärverbrennungszone; wobei die Primärverbrennungszone durch eine Mehrzahl von Brennkammersteinen seitlich und durch den Drehrost von unten umfasst ist; wobei die Primärverbrennungszone und die Sekundärverbrennungszone durch eine Brennkammerdüse separiert werden; wobei die Sekundärverbrennungszone der Brennkammer strömungstechnisch mit einem Eintritt bzw. Einlass des Wärmetauschers verbunden ist; wobei die Primärverbrennungszone einen ovalen Horizontalquerschnitt aufweist.

Bei bündelartig angeordneten Kesselrohren kann es sich um eine Mehrzahl von parallel zueinander angeordneten Kesselrohren mit zumindest weitgehend gleicher Länge handeln. Vorzugsweise können die Einlassöffnungen und die Auslassöffnungen aller Kesselrohre jeweils in einer gemeinsamen Ebene angeordnet sein; d.h., die Einlassöffnungen und die Auslassöffnungen aller Kesselrohre liegen auf gleicher Höhe.

"Horizontal" kann vorliegend eine ebene Ausrichtung einer Achse oder eines Querschnitts in der Annahme bezeichnen, dass der Kessel ebenso horizontal aufgestellt ist, womit beispielsweise das Erdniveau die Referenz sein kann. Alternativ kann "Horizontal" vorliegend "parallel" zur Grundebene des Kessels 11 bedeuten, so wie diese üblicherweise definiert wird. Weiter alternativ kann, insbesondere bei einem Fehlen einer Bezugsebene, "horizontal" lediglich als "Parallel" zur Verbrennungsebene des Rosts verstanden werden.

Der ovale Horizontalquerschnitt weist keine Totecken auf, und weist somit eine verbesserte Luftdurchströmung auf. Dabei weist die Biomasse-Heizanlage eine verbesserte Effizienz und niedrigere Emissionen auf. Zudem ist der ovale Querschnitt gut an die Art der Brennstoffverteilung bei seitlicher Zufuhr dessen und der daraus entstehenden Geometrie des Brennstoffbetts auf dem Rost angepasst. Ein ideal "runder" Querschnitt ist ebenso möglich, jedoch nicht so gut an die Geometrie der Brennstoffverteilung angepasst.

Gemäß einer Weiterbildung ist eine Biomasse-Heizanlage vorgesehen, wobei der Horizontalquerschnitt der Primärverbrennungszone über eine Höhe von zumindest 100 mm zumindest annähernd gleichbleibend vorgesehen ist.

Gemäß einer Weiterbildung ist eine Biomasse-Heizanlage vorgesehen, wobei die Brennkammer in der Sekundärverbrennungszone eine Brennkammerschräge aufweist, welche den Querschnitt der Sekundärverbrennungszone in Richtung des Eintritts bzw. des Einlasses des Wärmetauschers verjüngt.

Gemäß einer Weiterbildung ist eine Biomasse-Heizanlage vorgesehen, wobei der Drehrost ein erstes Drehrostelement, ein zweites Drehrostelement und ein drittes Drehrostelement aufweist, die jeweils um eine horizontal angeordnete Lagerachse um zumindest 90 Grad, vorzugsweise zumindest 160 Grad, noch weiter bevorzugt um zumindest 170 Grad, drehbar angeordnet sind; wobei die Drehrostelemente eine Verbrennungsfläche für den Brennstoff ausbilden; wobei die Drehrostelemente Öffnungen für die Luft zur Verbrennung aufweisen, wobei das erste Drehrostelement und das dritte Drehrostelement in ihrer Verbrennungsfläche identisch ausgebildet sind.

Die Öffnungen in den Drehrostelementen sind dabei bevorzugt schlitzförmig und in einem regelmäßigen Muster ausgebildet, um eine gleichmäßige Luftdurchströmung des Brennstoffbetts sicherzustellen.

Gemäß einer Weiterbildung ist eine Biomasse-Heizanlage vorgesehen, wobei das zweite Drehrostelement formschlüssig zwischen dem ersten Drehrostelement und dem dritten Drehrostelement angeordnet ist und Rostlippen aufweist, die derart angeordnet sind, dass diese in Horizontallage aller drei Drehrostelemente zumindest weitgehend dichtend an dem ersten Drehrostelement und dem dritten Drehrostelement anliegen.

Gemäß einer Weiterbildung ist eine Biomasse-Heizanlage vorgesehen, wobei der Drehrost weiter eine Drehrostmechanik aufweist, die derart konfiguriert ist, dass diese das dritte Drehrostelement unabhängig von dem ersten Drehrostelement und dem zweiten Drehrostelement drehen kann, und dass diese das erste Drehrostelement und das zweite Drehrostelement gemeinsam aber unabhängig von dem dritten Drehrostelement drehen kann.

Gemäß einer Weiterbildung ist eine Biomasse-Heizanlage vorgesehen, wobei die Verbrennungsfläche der Drehrostelemente eine im Wesentlichen ovale oder elliptische Verbrennungsfläche konfiguriert.

Gemäß einer Weiterbildung ist eine Biomasse-Heizanlage vorgesehen, wobei die Drehrostelemente zueinander komplementäre und gekrümmte Seiten aufweisen, wobei vorzugsweise das zweite Drehrostelement jeweils zu dem benachbarten ersten und dritten Drehrostelement konkave Seiten aufweist, und vorzugsweise das erste und dritte Drehrostelement jeweils zu dem zweiten Drehrostelement hin eine konvexe Seite aufweisen.

Gemäß einer Weiterbildung ist eine Biomasse-Heizanlage vorgesehen, wobei die Brennkammersteine einen modularen Aufbau aufweisen; und jeweils zwei weitgehend symmetrische Brennkammersteine einen geschlossenen Ring bilden, um die Primärverbrennungszone auszubilden; und zumindest zwei Ringe an Brennkammersteinen aufeinandergestapelt angeordnet sind.

Gemäß einer Weiterbildung ist eine Biomasse-Heizanlage vorgesehen, wobei der Wärmetauscher in den Kesselrohren angeordnete Spiralturbulatoren aufweist, die sich über die gesamte Länge der Kesselrohre erstrecken; und der Wärmetauscher in den Kesselrohren angeordnete Bandturbulatoren aufweist, die sich zumindest über die halbe Länge der Kesselrohre erstrecken.

Gemäß einer Weiterbildung ist eine Biomasse-Heizanlage vorgesehen, wobei der Wärmetauscher zwischen 18 und 24 Kesselrohre mit jeweils einem Durchmesser von 70 bis 85 mm und einer Wandstärke von 3 bis 4 mm aufweist.

Gemäß einer Weiterbildung ist eine Biomasse-Heizanlage vorgesehen, wobei der Kessel eine integriert angeordnete elektrostatische Filtereinrichtung aufweist, die eine Elektrode und einen Käfig aufweist; wobei der Kessel weiter eine mechanisch betätigbare Reinigungseinrichtung mit einem Schlaghebel mit einem Anschlagkopf aufweist; wobei die Reinigungseinrichtung derart eingerichtet ist, dass diese die Elektrode an deren Ende mit dem Anschlagkopf anschlagen kann, so dass eine Stoßwelle durch die Elektrode und/oder eine Transversalschwingung der Elektrode erzeugt wird, um die Elektrode von Verunreinigungen abzureinigen. Als Material für die Elektrode ist ein Stahl vorgesehen, der durch den Anschlagkopf in Schwingungen (longitudinal und/oder transversal und/oder Stoßwelle) versetzt werden kann. Hierzu kommt beispielsweise Federstahl und/oder Chromstahl in Frage. Der Werkstoff des Federstahls kann vorzugsweise ein austenitischer Chrom-Nickel-Stahl, beispielsweise 1.4310, sein. Weiter kann der Federstahl bombiert ausgeführt sein.

Gemäß einer Weiterbildung ist eine Biomasse-Heizanlage vorgesehen, wobei eine in den Kessel im kalten Bereich integrierte Reinigungseinrichtung vorgesehen ist, die derart konfiguriert ist, dass diese die Kesselrohre des Wärmetauschers durch eine Auf- und Abwärtsbewegung von in den Kesselrohren vorgesehenen Turbulatoren abreinigen kann. Die Auf- und Abwärtsbewegung kann auch als Hin- und Her- Bewegung der Turbulatoren in den Kesselrohren in Längsrichtung der Kesselrohre verstanden werden.

Gemäß einer Weiterbildung ist eine Biomasse-Heizanlage vorgesehen, wobei in der Brennkammer über dem Drehrost eine Glutbetthöhenmessmechanik angeordnet ist; wobei die Glutbetthöhenmessmechanik eine auf einer Drehachse angebrachte Brennstoff-Niveauklappe mit einer Hauptfläche aufweist; wobei eine Oberflächenparallele der Hauptfläche der Brennstoff-Niveauklappe winklig zu einer Mittenachse der Drehachse vorgesehen ist, wobei der Winkel vorzugsweise größer 20 Grad ist.

Obschon alle vorstehenden Einzelmerkmale und Details eines Aspekts der Erfindung und der Weiterbildungen dieses Aspekts in Zusammenhang mit der Biomasse-Heizanlage beschrieben sind, so sind diese Einzelmerkmale und Details auch als solche unabhängig von der Biomasse-Heizanlage offenbart.

Beispielsweise ist eine Brennkammerschräge einer Sekundärverbrennungszone einer Brennkammer mit deren hierin genannten Merkmalen und Eigenschaften offenbart, die (lediglich) für eine Biomasse-Heizanlage geeignet ist. Insofern ist eine Brennkammerschräge für eine Sekundärverbrennungszone einer Brennkammer einer Biomasse-Heizanlage mit den hierin genannten Merkmalen und Eigenschaften offenbart.

Weiter ist beispielsweise ein Drehrost für eine Brennkammer einer Biomasse-Heizanlage mit dessen hierin genannten Merkmalen und Eigenschaften offenbart.

Weiter ist beispielsweise eine Mehrzahl von Brennkammersteinen für eine Brennkammer einer Biomasse-Heizanlage mit deren hierin genannten Merkmalen und Eigenschaften offenbart.

Weiter ist beispielsweise eine integriert angeordnete elektrostatische Filtereinrichtung für eine Biomasse-Heizanlage mit deren hierin genannten Merkmalen und Eigenschaften offenbart.

Weiter ist beispielsweise eine Mehrzahl von Kesselrohren für eine Biomasse-Heizanlage mit deren hierin genannten Merkmalen und Eigenschaften offenbart.

Weiter ist beispielsweise eine Glutbetthöhenmessmechanik für eine Biomasse-Heizanlage mit deren hierin genannten Merkmalen und Eigenschaften offenbart.

Weiter ist beispielsweise ebenso, als solche, eine Brennstoff-Niveauklappe für eine Biomasse-Heizanlage mit deren hierin genannten Merkmalen und Eigenschaften offenbart.

Die erfindungsgemäße Biomasse-Heizanlage wird nachfolgend in Ausführungsbeispielen und einzelnen Aspekten anhand der Figuren der Zeichnung näher erläutert:
- Fig. 1: zeigt eine dreidimensionale Überblicksansicht einer Biomasse-Heizanlage gemäß einer Ausführungsform der Erfindung;
- Fig. 2: zeigt eine Querschnittsansicht durch die Biomasse-Heizanlage der Fig. 1, welche entlang einer Schnittlinie SL1 vorgenommen wurde und welche aus der Seitenansicht S betrachtet dargestellt ist;
- Fig. 3: zeigt ebenso eine Querschnittsansicht durch die Biomasse-Heizanlage der Fig. 1 mit einer Darstellung des Strömungsverlaufs, wobei die Querschnittsansicht entlang einer Schnittlinie SL1 vorgenommen wurde und aus der Seitenansicht S betrachtet dargestellt ist;
- Fig. 4: zeigt eine Teilansicht der Fig. 2, die eine Brennkammergeometrie des Kessels der Fig. 2 und Fig. 3 darstellt;
- Fig. 5: zeigt eine Schnittansicht durch den Kessel bzw. die Brennkammer des Kessels entlang der Vertikalschnittlinie A2 der Fig. 4;
- Fig. 6: zeigt eine dreidimensionale Schnittansicht auf die Primärverbrennungszone der Brennkammer mit dem Drehrost der Fig. 4;
- Fig. 7: zeigt entsprechend zur Fig. 6 eine Explosionsdarstellung der Brennkammersteine;
- Fig. 8: zeigt eine Aufsicht auf den Drehrost mit Drehrostelementen von oben aus Sicht der Schnittlinie A1 der Fig. 2;

- Fig. 9: zeigt den Drehrost der Fig. 2 in geschlossener Position, wobei alle Drehrostelemente horizontal ausgerichtet bzw. geschlossen sind;
- Fig. 10: zeigt den Drehrost der Fig. 9 in dem Zustand einer Teilabreinigung des Drehrosts im Gluterhaltungsbetrieb;
- Fig. 11: zeigt den Drehrost der Fig. 9 im Zustand der Universalabreinigung, welche bevorzugt während eines Anlagenstillstands durchgeführt wird;
- Fig. 12: zeigt eine Ausschnitt-Detailansicht der Fig. 2;
- Fig. 13: zeigt eine Reinigungseinrichtung, mit der sowohl der Wärmetauscher als auch die Filtereinrichtung der Fig. 2 automatisch gereinigt werden können;
- Fig. 14: zeigt eine Turbulatorhalterung in herausgestellter und vergrößerter Form;
- Fig. 15: zeigt eine Abreinigungsmechanik in einem ersten Zustand, wobei sich sowohl die Turbulatorhalterungen der Fig. 14 als auch eine Käfighalterung in einer unteren Position befinden;
- Fig. 16: zeigt die Abreinigungsmechanik in einem zweiten Zustand, wobei sich sowohl die Turbulatorhalterungen der Fig. 14 als auch die Käfighalterung in einer oberen Position befinden;
- Fig. 17: zeigt eine freigestellte Glutbetthöhenmessmechanik mit einer Brennstoff-Niveauklappe;
- Fig. 18: zeigt eine Detailansicht der Brennstoff-Niveauklappe.

### BESCHREIBUNG VON BEISPIELHAFTEN AUSFÜHRUNGSFORMEN

Im Folgenden werden verschiedene Ausführungsformen der Erfindung unter Bezugnahme auf die beigefügten Zeichnungen offenbart. Ausführungsformen und darin verwendete Begriffe sollen jedoch nicht dazu dienen, die vorliegende Offenbarung auf bestimmte Ausführungsformen zu beschränken, und sie sollte so ausgelegt werden, dass sie verschiedene Änderungen, Äquivalente und/oder Alternativen gemäß den Ausführungsformen der vorliegenden Offenbarung beinhaltet.

Sollten in der Beschreibung allgemeinere Begriffe für in den Figuren dargestellte Merkmale oder Elemente verwendet werden, so ist beabsichtigt, dass für den Fachmann nicht nur das spezielle Merkmal oder Element in den Figuren offenbart ist, sondern auch die allgemeinere technische Lehre.

In Bezug auf die Beschreibung der Figuren werden die gleichen Bezugszeichen in den einzelnen Figuren verwendet, um auf ähnliche oder technisch entsprechende Elemente zu verweisen. Weiter können der Übersichtlichkeit halber in einzelnen Detail- oder Ausschnittsansichten mehr Elemente oder Merkmale mit Bezugszeichen dargestellt sein, als in den Überblicksansichten. Dabei ist davon auszugehen, dass diese Elemente oder Merkmale auch entsprechend in den Überblicksdarstellungen offenbart sind, auch wenn diese dort nicht explizit aufgeführt sind.

Es ist zu verstehen, dass eine Singularform eines Substantivs, das einem Gegenstand entspricht, eines oder mehrere der Dinge beinhalten kann, es sei denn, der betreffende Kontext weist eindeutig auf etwas anderes hin.

In der vorliegenden Offenbarung kann ein Ausdruck wie "A oder B", "mindestens einer von A oder/und B" oder "einer oder mehrere von A oder/und B" alle möglichen Kombinationen von zusammen aufgeführten Merkmalen beinhalten. Ausdrücke wie "erster", "zweiter", "primär" oder "sekundär", die hierin verwendet werden, können verschiedene Elemente unabhängig von ihrer Reihenfolge und/oder Bedeutung darstellen und schränken entsprechende Elemente nicht ein. Wenn beschrieben wird, dass ein Element (z.B. ein erstes Element) "funktionsfähig" oder "kommunikativ" mit einem anderen Element (z.B. einem zweiten Element) gekoppelt oder verbunden ist, kann das Element direkt mit dem anderen Element verbunden werden oder mit dem anderen Element über ein anderes Element (z.B. ein drittes Element) verbunden werden.

Ein in der vorliegenden Offenbarung verwendeter Ausdruck "konfiguriert zu" (oder "eingerichtet") kann beispielsweise durch "geeignet für", "geeignet zu", "angepasst zu", "gemacht zu", "fähig zu" oder "entworfen zu" ersetzt werden, je nach dem technisch Möglichen. Alternativ kann in einer bestimmten Situation ein Ausdruck "Vorrichtung konfiguriert zu" oder "eingerichtet zu" bedeuten, dass die Vorrichtung zusammen mit einer anderen Vorrichtung oder Komponente arbeiten kann, oder eine entsprechende Funktion ausführen kann.

Alle Größenangaben, welche in "mm" angegeben sind, sind als ein Größenbereich von +- 1 mm um den angegebenen Wert zu verstehen, sofern nicht eine andere Toleranz oder andere Bereiche explizit angegeben ist.

Anzumerken ist, dass die vorliegenden Einzelaspekte, beispielsweise der Drehrost, die Brennkammer oder die Filtereinrichtung gesondert von bzw. getrennt von der Biomasse-Heizanlage hierin als Einzelteile oder Einzelvorrichtungen offenbart sind. Es ist dem Fachmann also klar, dass auch einzelne Aspekte oder Anlagenteile hierin auch für sich genommen offenbart sind. Vorliegend sind die einzelnen Aspekte oder Anlageteile insbesondere in den durch Klammern gekennzeichneten Unterkapiteln offenbart. Es ist vorgesehen, dass diese einzelnen Aspekte in weiteren Patenten auch gesondert beansprucht werden können.

Weiter sind der Übersichtlichkeit halber in den Figuren nicht alle Merkmale und Elemente, insbesondere wenn sich diese wiederholen, einzeln bezeichnet. Es sind vielmehr die Elemente und Merkmale jeweils exemplarisch bezeichnet. Analoge oder gleiche Elemente sind dann als solche zu verstehen.

### (Biomasse-Heizanlage)

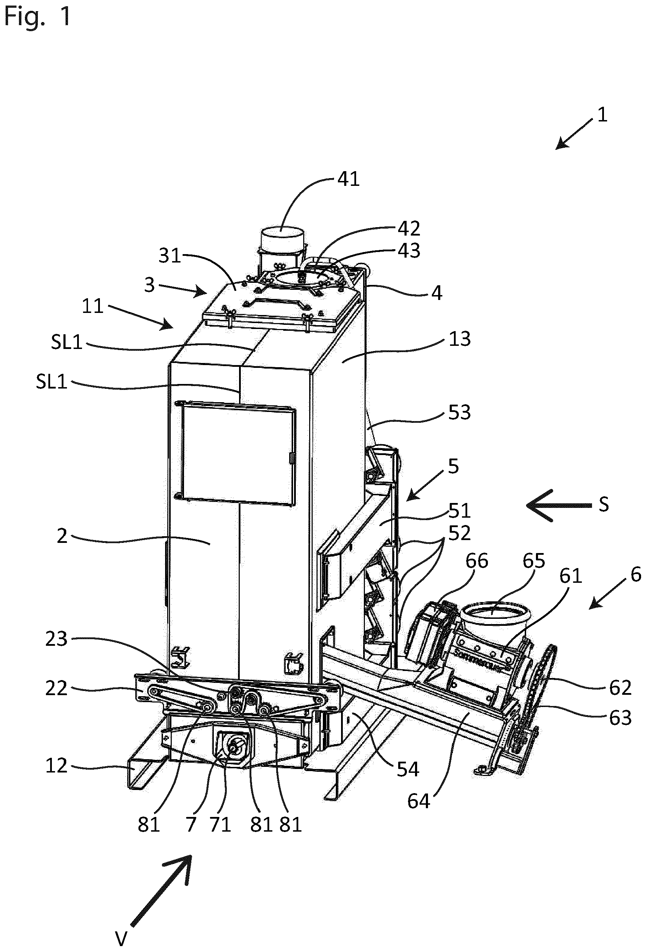

Fig. 1 zeigt eine dreidimensionale Überblicksansicht der Biomasse-Heizanlage 1 gemäß einer Ausfuhrungsform der Erfindung.

Der Pfeil V bezeichnet in den Figuren die Vorderansicht der Anlage 1, und der Pfeil S bezeichnet in den Figuren die Seitenansicht der Anlage 1.

Die Biomasse-Heizanlage 1 weist einen Kessel 11 auf, der auf einem Kesselfuß 12 gelagert ist. Der Kessel 11 weist ein Kesselgehäuse 13, beispielsweise aus Stahlblech, auf.

Im vorderen Teil des Kessels 11 befindet sich eine Brenneinrichtung 2 (nicht dargestellt), die über eine erste Wartungsöffnung mit einem Verschluss 21 erreicht werden kann. Eine Drehmechanikhalterung 22 für einen Drehrost 25 (nicht dargestellt) lagert eine Drehmechanik 23, mit der Antriebskräfte auf Lagerachsen 81 des Drehrosts 25 übertragen werden können.

Im Mittelteil des Kessels 11 befindet sich ein Wärmetauscher 3 (nicht dargestellt), der von oben über eine zweite Wartungsöffnung mit einem Verschluss 31 erreicht werden kann.

Im Hinterteil des Kessels 11 befindet sich eine optionale Filtereinrichtung 4 (nicht dargestellt) mit einer Elektrode 44 (nicht dargestellt), die mit einer isolierenden Elektrodenhalterung 43 aufgehängt ist, und die über eine Elektrodenversorgungsleitung 42 unter Spannung gesetzt wird. Das Abgas der Biomasse-Heizanlage 1 wird über einen Abgasausgang 41 abgeführt, der der Filtereinrichtung 4 strömungstechnisch nachgelagert angeordnet ist. Hier kann ein Ventilator vorgesehen sein.

Hinter dem Kessel 11 ist eine Rezirkulationseinrichtung 5 vorgesehen, die einen Teil des Abgases über Rezirkulationskanäle 51, 53 und 54 und Klappen 52 zur Wiederverwendung beim Verbrennungsvorgang rezirkuliert.

Weiter weist die Biomasse-Heizanlage 1 eine Brennstoffzufuhr 6 auf, mit der der Brennstoff kontrolliert zu der Brenneinrichtung 2 in die Primärverbrennungszone 26 von der Seite auf den Drehrost 25 befördert wird. Die Brennstoffzufuhr 6 weist eine Zellradschleuse 61 mit einer Brennstoffzufuhröffnung 65 auf, wobei die Zellradschleuse 61 einen Antriebsmotor 66 mit einer Ansteuerelektronik aufweist. Eine von dem Antriebsmotor 66 angetriebene Achse 62 treibt eine Übersetzungsmechanik 63 an, die eine (nicht dargestellte) Brennstoff-Förderschnecke 67 antreiben kann, so dass der Brennstoff in einem Brennstoff-Zufuhrkanal 64 zu der Brenneinrichtung 2 gefördert wird.

Im unteren Teil der Biomasse-Heizanlage 1 ist eine Ascheabfuhreinrichtung 7 vorgesehen, welche eine Ascheaustragungsschnecke 71 in einem Ascheaustragungskanal aufweist, die von einem Motor 72 betrieben wird.

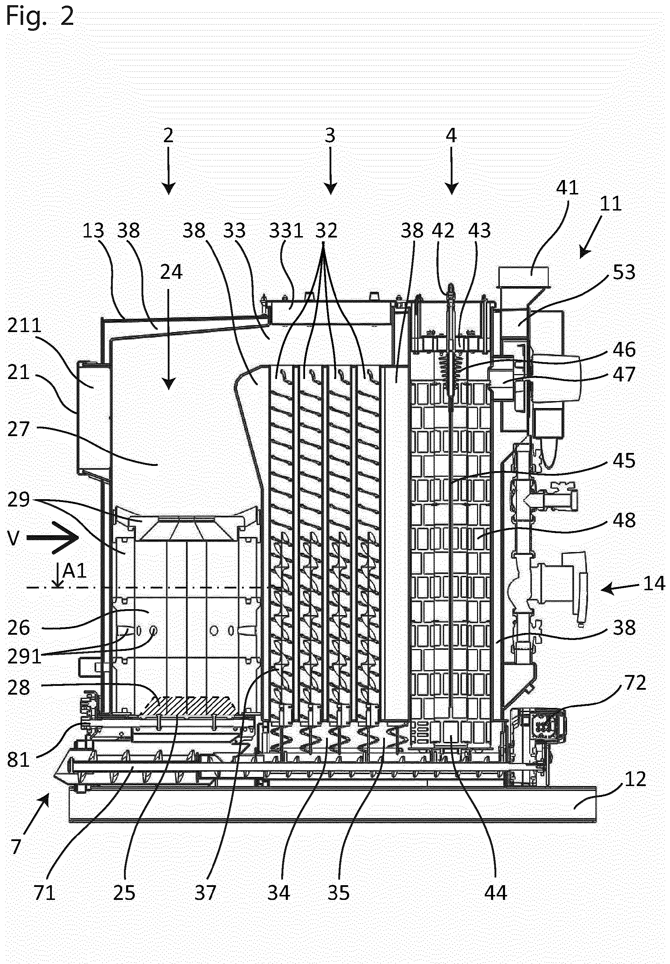

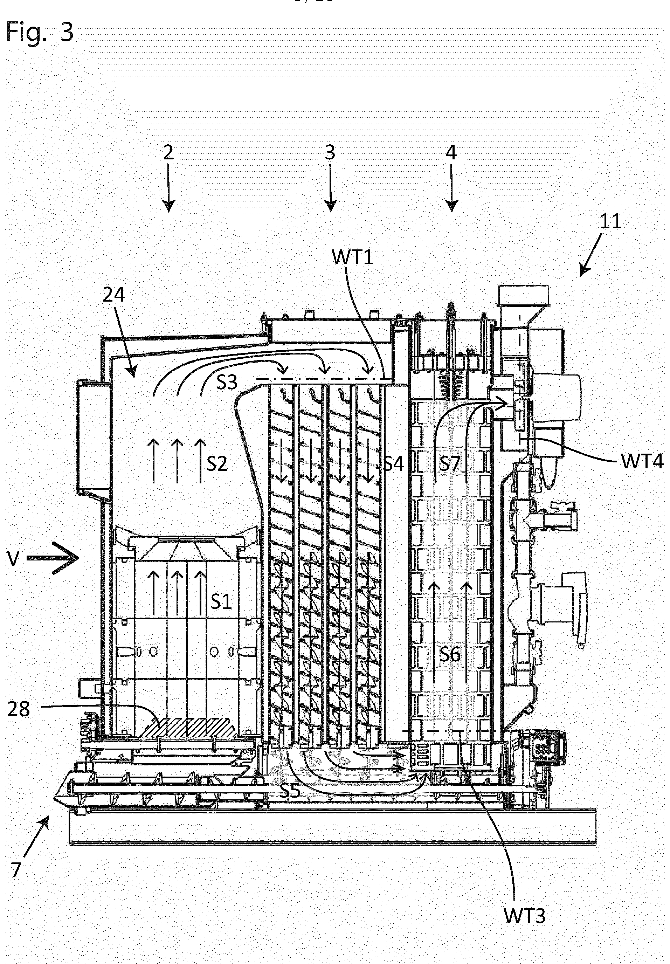

Fig. 2 zeigt nun eine Querschnittsansicht durch die Biomasse-Heizanlage 1 der Fig. 1, welche entlang einer Schnittlinie SL1 vorgenommen wurde und welche aus der Seitenansicht S betrachtet dargestellt ist. In der korrespondierenden Fig. 3, welche den gleichen Schnitt wie Fig. 2 darstellt, sind der Übersichtlichkeit halber die Strömungen des Rauchgases, und strömungstechnische Querschnitte schematisch dargestellt. Zu Fig. 3 anzumerken ist, dass einzelne Bereiche im Vergleich zu der Fig. 2 abgeblendet dargestellt sind. Dies dient nur der Übersichtlichkeit der Fig. 3 und der Sichtbarkeit der Strömungspfeile S5, S6 und S7.

Von links nach rechts sind in Fig. 2 die Brenneinrichtung 2, der Wärmetauscher 3 und eine (optionale) Filtereinrichtung 4 des Kessels 11 vorgesehen. Der Kessel 11 ist auf dem Kesselfuß 12 gelagert, und weist ein mehrwandiges Kesselgehäuse 13 auf, in welchem Wasser oder ein anderes fluides Wärmetauschmedium zirkulieren kann. Zur Zufuhr und Abfuhr des Wärmetauschmediums ist eine Wasserzirkulationseinrichtung 14 mit Pumpe, Ventilen, Leitungen, etc. vorgesehen.

Die Brenneinrichtung 2 weist eine Brennkammer 24 auf, in der im Kern der Verbrennungsprozess des Brennstoffes stattfindet. Die Brennkammer 24 weist einen, später näher erläuterten, mehrteiligen Drehrost 25 auf, auf dem das Brennstoffbett 28 aufliegt. Der mehrteilige Drehrost 25 ist mittels einer Mehrzahl von Lagerachsen 81 drehbar gelagert angeordnet.

Weiter bezugnehmend auf Fig. 2 ist die Primärverbrennungszone 26 der Brennkammer 24 durch (eine Mehrzahl von) Brennkammersteine(n) 29 umfasst, womit die Brennkammersteine 29 die Geometrie der Primärverbrennungszone 26 definieren. Der Querschnitt der Primärverbrennungszone 26 (beispielsweise) entlang der Horizontalschnittlinie A1 ist im Wesentlichen oval (beispielsweise 380 mm +- 60mm x 320 mm +- 60 mm; dabei ist anzumerken, dass einige der vorstehenden Größenkombinationen auch einen kreisförmigen Querschnitt ergeben können, was nicht unter die Patentansprüche fällt) . Die Pfeile

S1 geben die Primärströmung in der Primärverbrennungszone 26 schematisch wieder, wobei diese Primärströmung zudem (nicht näher dargestellt) einen Drall aufweist, um die Durchmischung des Rauchgases zu verbessern. Die Brennkammersteine 29 bilden die Innenverkleidung der Primärverbrennungszone 26 aus, speichern Wärme und sind dem Feuer direkt ausgesetzt. Damit schützen die Brennkammersteine 29 auch das weitere Material der Brennkammer 24, beispielsweise Gusseisen, vor der direkten Flammeneinwirkung in der Brennkammer 24. Die Brennkammersteine 29 sind vorzugsweise an die Form des Rosts 25 angepasst. Die Brennkammersteine 29 weisen weiter Sekundärluft- bzw. Rezirkulationsdüsen 291 auf, die das Rauchgas in die Primärverbrennungszone 26 zur erneuten Teilnahme am Verbrennungsprozess rezirkulieren. Die Sekundärluftdüsen 291 sind dabei nicht auf die Mitte der Primärverbrennungszone 26 ausgerichtet, sondern azentrisch ausgerichtet, um einen Drall der Strömung in der Primärverbrennungszone 26 zu bewirken (d.h., eine Wirbelströmung). Die Brennkammersteine 29 werden später noch eingehender erläutert. Eine Isolation 311 ist am Kesselrohreintritt vorgesehen. Die ovale Querschnittsform der Primärverbrennungszone 26 (und der Düse) begünstigen die Ausbildung einer Wirbelströmung vorteilhaft.

Eine Sekundärverbrennungszone 27 schließt sich an die Primärverbrennungszone 26 der Brennkammer 26 an und definiert den Strahlungsteil der Brennkammer 26. In dem Strahlungsteil gibt das bei der Verbrennung entstandene Rauchgas seine Wärmeenergie hauptsächlich durch Wärmestrahlung insbesondere an das Wärmetauschmedium ab, welches sich in den beiden linken Kammern für das Wärmetauschmedium 38 befindet. Die entsprechende Rauchgasströmung ist in Fig. 3 durch die Pfeile S2 und S3 angegeben. Die erste Wartungsöffnung 21 ist mit einem Dämmmaterial, beispielsweise Vermiculite™, isoliert. Die vorliegende Sekundärverbrennungszone 27 ist derart eingerichtet, dass ein Ausbrand des Rauchgases gewährleistet wird. Die spezielle geometrische Ausgestaltung der Sekundärverbrennungszone 27 wird später noch eingehender erläutert.

Nach der Sekundärverbrennungszone 27 strömt das Rauchgas in die Wärmetauscheinrichtung 3, welche ein Bündel von parallel zueinander vorgesehenen Kesselrohren 32 aufweist. In den Kesselrohren 32 strömt das Rauchgas nun abwärts, wie in Fig. 3 durch die Pfeile S4 angegeben. Man kann diesen Teil der Strömung auch als Konvektionsteil bezeichnen, da die Wärmeabgabe des Rauchgases im Wesentlichen an den Kesselrohrwänden über eine erzwungene Konvektion erfolgt. Durch die im Kessel 11 verursachten Temperaturgradienten im Wärmetauschermedium, beispielsweise im Wasser, stellt sich eine natürliche Konvektion des Wassers ein, welche eine Durchmischung des Kesselwassers begünstigt.

In den Kesselrohren 32 sind Federturbulatoren 36 und Spiral- bzw. Bandturbulatoren 37 angeordnet, um den Wirkungsgrad der Wärmetauscheinrichtung 4 zu verbessern. Dies wird später noch eingehender erläutert werden.

Der Ausgang der Kesselrohre 32 mündet über den Wendekammereintritt 34 bzw. -einlass in die Wendekammer 35. Falls die Filtereinrichtung 4 nicht vorgesehen ist, wird das Rauchgas wieder im Kessel 11 nach oben abgeführt. Der andere Fall der optionalen Filtereinrichtung 4 ist in den Fig. 2 und 3 dargestellt. Dabei wird das Rauchgas nach der Wendekammer 35 wieder nach oben in die Filtereinrichtung 4 eingeleitet (vgl. Pfeile S5), welche vorliegend beispielhaft eine elektrostatische Filtereinrichtung 4 ist. Dabei können am Eintritt 44 der Filtereinrichtung 4 Strömungsblenden vorgesehen sein, die die Rauchgasströmung homogenisieren.

Elektrostatische Staubfilter, oder auch Elektroabscheider genannt, sind Einrichtungen zur Abscheidung von Partikeln aus Gasen, die auf dem elektrostatischen Prinzip beruhen. Diese Filtereinrichtungen werden insbesondere zur elektrischen Reinigung von Abgasen verwendet. Bei Elektrofiltern werden Staubteilchen durch eine Koronaentladung elektrisch aufgeladen und zur entgegengesetzt aufgeladenen Elektrode gezogen. Die Koronaentladung findet auf einer dafür geeigneten, geladenen Hochspannungselektrode im Inneren des Elektrofilters statt. Die Elektrode ist bevorzugt mit herausragenden Spitzen und eventuell scharfen Kanten ausgeführt, weil dort die Dichte der Feldlinien und damit auch die elektrische Feldstärke am größten und somit die Koronaentladung begünstigt ist. Die gegengesetzte Elektrode besteht für gewöhnlich aus einem geerdeten Abgasrohrabschnitt, der um die Elektrode gelagert ist. Der Abscheidungsgrad eines Elektrofilters ist insbesondere von der Verweilzeit der Abgase im Filtersystem und der Spannung zwischen Sprüh- und Abscheidungselektrode abhängig. Die dafür notwendige gleichgerichtete Hochspannung wird von einer Hochspannungserzeugungseinrichtung (nicht dargestellt) bereitgestellt. Die Hochspannungserzeugungsanlage und die Halterung für die Elektrode sind vor Staub und Verschmutzung zu schützen, um ungewollte Kriechströme zu vermeiden und die Standzeit der Anlage 1 zu verlängern.

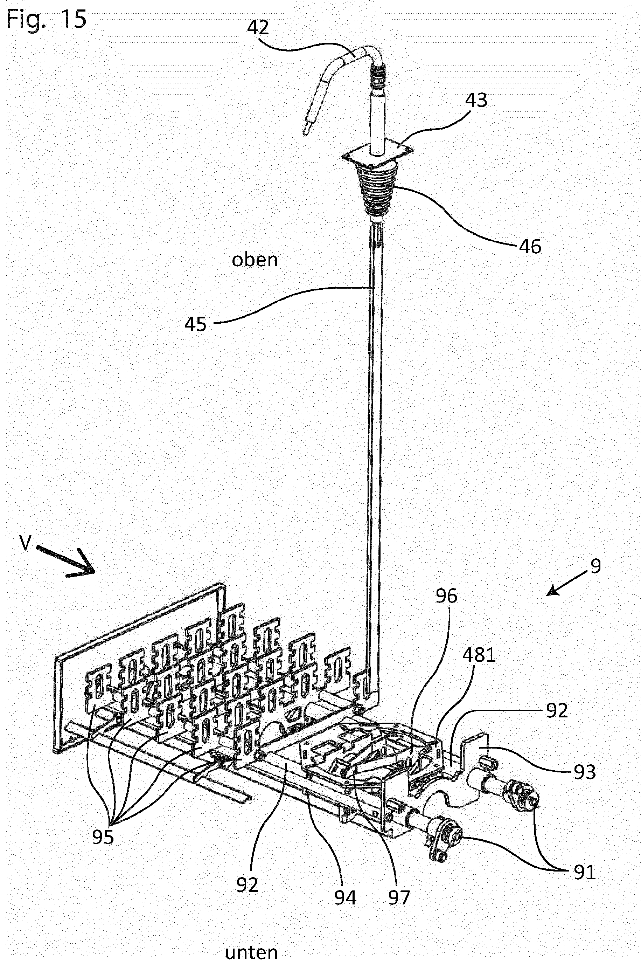

Wie in Fig. 2 gezeigt, ist eine stabförmige Elektrode 45 (welche vorzugsweise wie eine längliche, plattenförmige Stahlfeder ausgestaltet ist, vgl. Fig. 15) in etwa mittig in einem annähernd kaminförmigen Innenraum der Filtereinrichtung 4 gehaltert. Die Elektrode 45 besteht zumindest weitgehend aus einem hochwertigen Federstahl oder Chromstahl und ist von einer Elektrodenhalterung 43 über einen Hochspannungsisolator, d.h., eine Elektrodenisolation 46, gehaltert.

Die Elektrode 45 hängt schwingungsfähig nach unten in den Innenraum der Filtereinrichtung 4. Dabei kann die Elektrode 45 beispielsweise quer zur Längsachse der Elektrode 45 hin- und her schwingen.

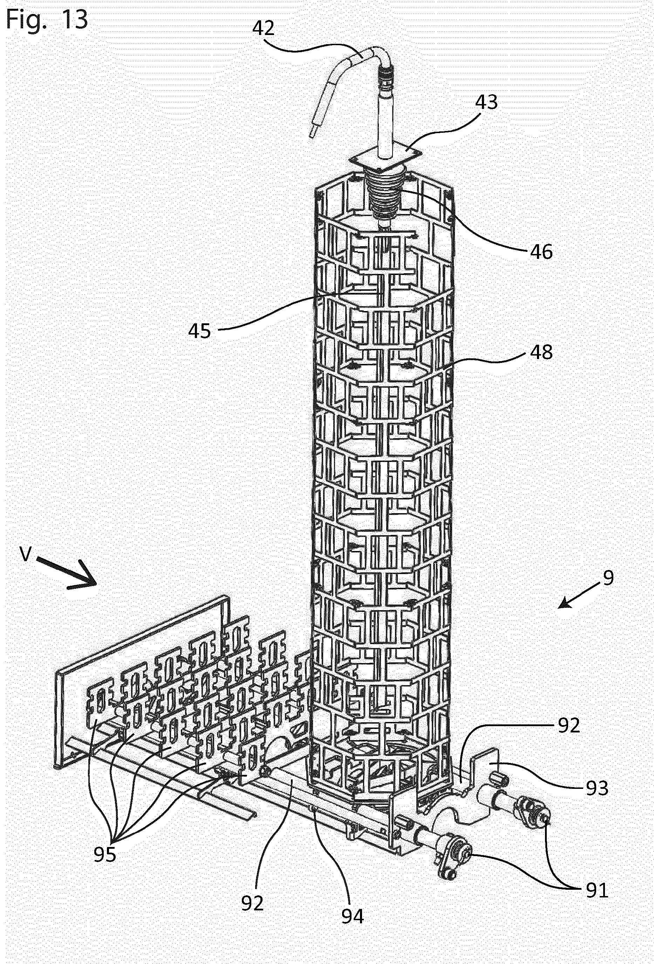

Ein Käfig 48 dient gleichzeitig als Gegenelektrode und als Abreinigungsmechanik für die Filtereinrichtung 4. Der Käfig 48 ist mit dem Masse- bzw. Erdpotential verbunden. Durch den herrschenden Potentialunterschied wird das in der Filtereinrichtung 4 strömende Abgas, vg1. die Pfeile S6, gefiltert wie vorstehend erläutert. Im Falle der Abreinigung der Filtereinrichtung 4 wird die Elektrode 45 stromlos geschaltet. Der Käfig 48 weist vorzugsweise ein achteckiges regelmäßiges Querschnittsprofil auf, so wie sich das beispielsweise der Ansicht der Fig. 13 entnehmen lässt. Der Käfig 48 kann vorzugsweise bei der Herstellung mit dem Laser zugeschnitten werden.

Das Rauchgas strömt nach dem Austritt aus dem Wärmetauscher 3 durch die Wendekammer 34 in den Eintritt 44 der Filtereinrichtung 4.

Dabei ist die (optionale) Filtereinrichtung 4 optional vollintegriert in den Kessel 11 vorgesehen, womit die dem Wärmetauscher 3 zugewandte und von dem Wärmetauschermedium durchspülte Wandfläche auch aus Richtung der Filtereinrichtung 4 zum Wärmetausch eingesetzt wird, womit die Effizienz der Anlage 1 nochmals verbessert wird. Damit kann zumindest ein Teil der Wand die Filtereinrichtung 4 mit dem Wärmetauschmedium durchspült sein.

Am Filteraustritt 47 strömt das gereinigte Abgas aus der Filtereinrichtung 4 hinaus, wie durch die Pfeile S7 angegeben. Nach dem Filteraustritt wird ein Teil des Abgases über die Rezirkulationseinrichtung 5 wieder zu der Primärverbrennungszone 26 zurückgeführt. Auch dies wird später noch näher erläutert werden. Der verbleibende Teil des Abgases wird über den Abgasausgang 41 aus dem Kessel 11 hinausgeleitet.

Eine Ascheabfuhr 7 ist im unteren Teil des Kessels 11 angeordnet. Über eine Ascheaustragungsschnecke 71 wird die beispielsweise aus der Brennkammer 24, den Kesselrohren 32 und der Filtereinrichtung 4 herausfallende Asche seitlich aus dem Kessel 11 ausgefördert.

Der Kessel 11 dieser Ausführungsform wurde mittels CFD-Simulationen berechnet. Weiter wurden Praxisexperimente durchgeführt, um die CFD-Simulationen zu bestätigen. Ausgangspunkt der Überlegungen waren Berechnungen für einen 100 kW Kessel, wobei jedoch ein Leistungsbereich von 20 bis 500 kW berücksichtigt wurde.

Eine CFD-Simulation (CFD = Computational Fluid Dynamics = numerische Strömungsmechanik) ist die räumlich und zeitlich aufgelöste Simulation von Strömungs- und Wärmeleitprozessen. Dabei können die Strömungsprozesse laminar und/oder turbulent sein, von chemischen Reaktionen begleitet auftreten, oder es kann sich um ein mehrphasiges System handeln. CFD-Simulationen eignen sich somit gut als Design- und Optimierungswerkzeug. Bei der vorliegenden Erfindung wurden CDF-Simulationen eingesetzt, um die strömungstechnischen Parameter derart zu optimieren, dass die vorstehend aufgeführten Aufgaben der Erfindung gelöst werden. Insbesondere wurden im Ergebnis die mechanische Ausgestaltung und Dimensionierung des Kessels 11 maßgeblich durch die CFD-Simulation und auch durch zugehörige praktische Experimente definiert. Die Simulationsergebnisse basieren auf einer Strömungssimulation mit Berücksichtigung der Wärmeübertragung.

Die vorstehend aufgeführten Bestandteile der Biomasse-Heizanlage 1 und des Kessels 11, die Ergebnis der CFD-Simulationen sind, werden nachstehend eingehender beschrieben.

### (Brennkammer)

Die Gestaltung der Brennkammerform ist von Wichtigkeit, um die aufgabengemäßen Anforderungen einhalten zu können. Durch die Brennkammerform bzw. -geometrie erreicht werden sollen eine möglichst gute turbulente Durchmischung und Homogenisierung der Strömung über den Querschnitt des Rauchgaskanals, eine Minimierung des Feuerungsvolumens, eine Reduktion des Luftüberschusses und des Rezirkulationsverhältnisses (Wirkungsgrad, Betriebskosten), eine Reduktion der CO-Emissionen und der NOx-Emissionen, eine Reduktion von Temperaturspitzen (Fouling und Verschlackung) sowie eine Reduktion von Rauchgas-Geschwindigkeitsspitzen (Materialbeanspruchung und Erosion).

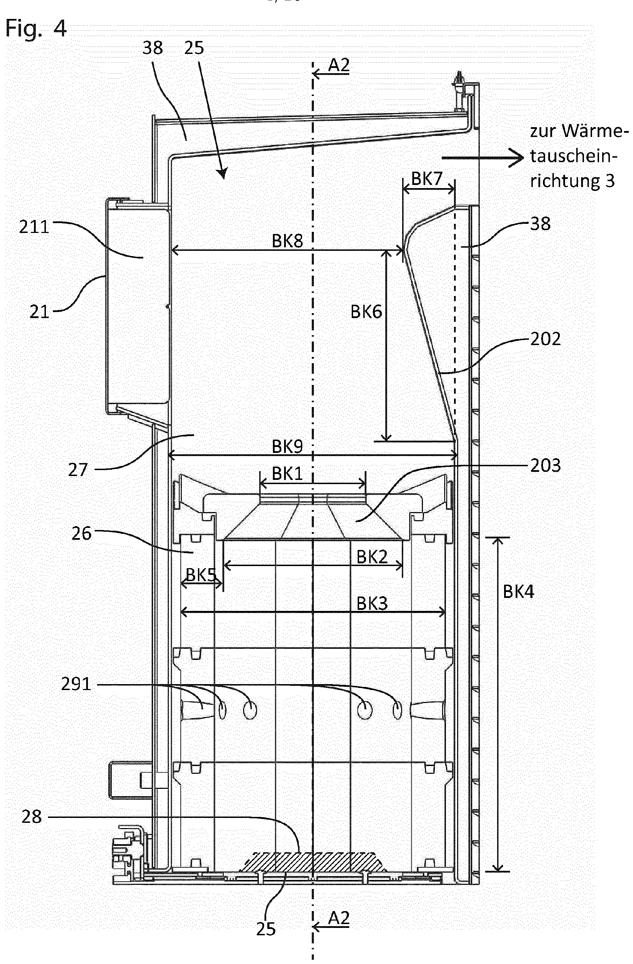

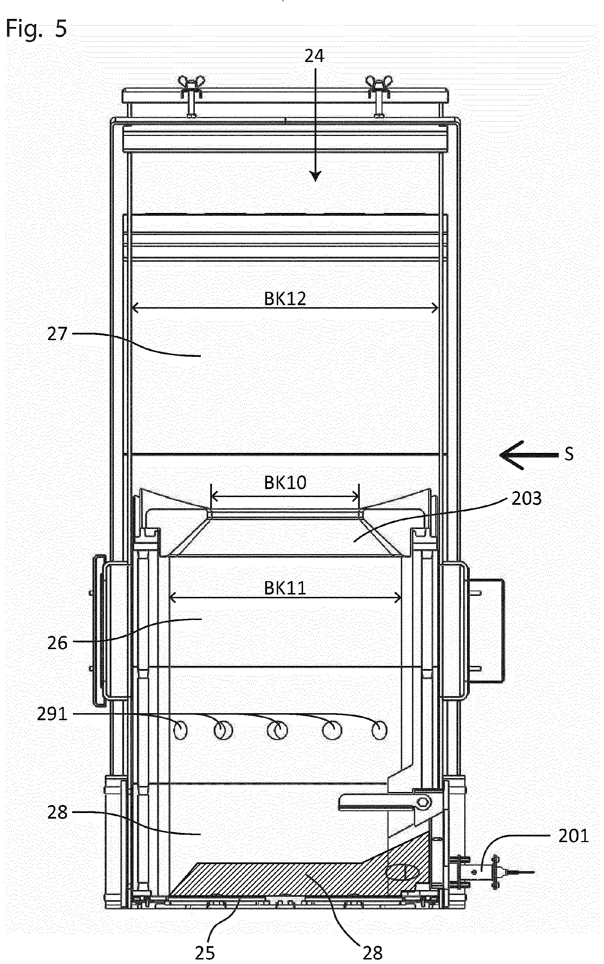

Die Fig. 4, die eine Teilansicht der Fig. 2 ist, und die Fig. 5, welche eine Schnittansicht durch den Kessel 11 entlang der Vertikalschnittlinie A2 ist, stellen eine Brennkammergeometrie dar, die den vorstehend genannten Anforderungen für Biomasse-Heizanlagen über einen weiten Leistungsbereich von beispielsweise 20 bis 500 kW gerecht wird.

Die in den Figuren 3 und 4 angegebenen und über CFD-Berechnungen und Praxisexperimente ermittelten Maße sind im Einzelnen wie folgt:
BK1 = 172 mm +- 40 mm, vorzugsweise +-17 mm;
BK2 = 300 mm +-50 mm, vorzugsweise +-30 mm;
BK3 = 430 mm +- 80 mm, vorzugsweise +- 40 mm;
BK4 = 538 mm +- 80 mm, vorzugsweise +- 50 mm;
BK5 = (BK3 - BK2) / 2 = bspw. 65 mm +-30 mm, vorzugsweise +- 20 mm;
BK6 = 307 mm +-50 mm, vorzugsweise +- 20 mm;
BK7 = 82 mm +- 20 mm, vorzugsweise +- 20 mm;
BK8 = 379 mm +- 40 mm, vorzugsweise +- 20 mm;
BK9 = 470 mm +-50 mm, vorzugsweise +- 20 mm;
BK10 = 232 mm +- 40 mm, vorzugsweise +- 20 mm;
BK11 = 380 mm +- 60 mm, vorzugsweise +- 30 mm;
BK12 = 460 mm +- 80 mm, vorzugsweise +- 30 mm.

Mit diesen Werten werden vorliegend sowohl die Geometrien der Primärverbrennungszone 26 als auch der Sekundärverbrennungszone 27 der Brennkammer 24 optimiert. Die angegebenen Größenbereiche sind Bereiche, mit denen die Anforderungen ebenso (annähernd) erfüllt werden, wie mit den angegebenen exakten Werten.

Dabei kann vorzugsweise eine Kammergeometrie der Primärverbrennungszone 26 der Brennkammer 24 (bzw. ein Innenvolumen der Primärverbrennungszone 26 der Brennkammer 24) anhand der folgenden Grundparameter definiert werden:

Ein Volumen mit einer ovalen horizontalen Grundfläche mit den Maßen von 380 mm +- 60mm (vorzugsweise +-30mm) x 320 mm +- 60 mm (vorzugsweise +-30mm), sowie einer Höhe von 538 mm +- 80 mm (vorzugsweise +- 50 mm).

Als Fortbildung dessen kann das vorstehend definierte Volumen eine obere Öffnung in Form einer Brennkammerdüse 203 aufweisen, die in die Sekundärverbrennungszone 27 der Brennkammer 24 mündet, welche eine in die Sekundärverbrennungszone 27 hineinragende Brennkammerschräge 202 aufweist, welche vorzugsweise das Wärmetauschmedium 38 beinhaltet. Die Brennkammerschräge 202 verringert den Querschnitt der Sekundärverbrennungszone 27 zumindest um 5%, bevorzugt um zumindest 15% und noch mehr bevorzugt um zumindest 19%.

Die Brennkammerschräge 202 dient der Homogenisierung der Strömung S3 in Richtung des Wärmetauschers 3 und damit der Beströmung der Kesselrohre 32.

Im Stand der Technik gibt es häufig Brennkammern mit rechteckiger oder polygonaler Brennkammer und Düse, wobei jedoch die unregelmäßige Form der Brennkammer und der Düse ein weiteres Hindernis für eine gleichmäßige Luftverteilung und eine gute Mischung von Luft und Brennstoff, wie vorliegend erkannt wurde.

Deshalb ist vorliegend die Brennkammer 24 ohne Totecken oder Totkanten vorgesehen.

Vorliegend wurde somit erkannt, dass die Geometrie der Brennkammer (und des gesamten Strömungsverlaufs im Kessel) eine maßgebliche Rolle bei den Überlegungen zur Optimierung der Biomasse-Heizanlage 1 spielt. Deshalb wurde (in Abkehr von den üblichen rechteckigen oder mehr-eckigen Formgebungen) die hierin beschriebene ovale oder runde Grundgeometrie ohne Totecken gewählt. Zudem wurde auch diese Grundgeometrie der Brennkammer und deren Aufbau mit den vorstehend angegebenen Maßen / Maßbereichen optimiert. Dabei sind diese Maße /Maßbereiche derart gewählt, dass insbesondere auch unterschiedliche Brennstoffe (Hackgut und Pellets) mit unterschiedlicher Qualität (beispielsweise mit unterschiedlichem Wassergehalt) bei sehr hohem Wirkungsgrad verbrannt werden kann. Dies haben die Praxistests und CFD-Simulationen ergeben.

Die Primärverbrennungszone 26 der Brennkammer 24 umfasst ein Volumen, das im Außenumfang einen ovalen Horizontalquerschnitt aufweist (ein solcher Querschnitt ist in Fig. 2 beispielhaft mit A1 gekennzeichnet). Dieser Horizontalquerschnitt kann zudem bevorzugt die Grundfläche der Primärverbrennungszone 26 der Brennkammer 24 darstellen. Über die durch den Doppelpfeil BK4 angegebene Höhe kann die Brennkammer 24 einen annähernd gleichbleibenden Querschnitt aufweisen. Insofern kann die Primärverbrennungszone 24 ein annähernd oval-zylindrisches Volumen aufweisen. Bevorzugt können die Seitenwände und die Grundfläche (der Rost) der Primärverbrennungszone 26 senkrecht aufeinander stehen.

Vorstehend wird der Begriff "annähernd" verwendet, da selbstverständlich einzelne Kerben, konstruktiv bedingte Abweichungen oder kleine Asymmetrien vorhanden sein können, beispielsweise bei den Übergängen der einzelnen Brennkammersteine 29 zueinander. Diese geringfügigen Abweichungen spielen strömungstechnisch jedoch nur eine untergeordnete Rolle.

Der Horizontalquerschnitt der Brennkammer 24 und insbesondere der Primärverbrennungszone 26 der Brennkammer 24 können ebenso bevorzugt regelmäßig ausgeführt sein. Weiter kann der Horizontalquerschnitt der Brennkammer 24 und insbesondere der Primärverbrennungszone 26 der Brennkammer 24 bevorzugt eine regelmäßige (und/oder symmetrische) Ellipse sein.

Zudem kann der Horizontalquerschnitt (der Außenumfang) der Primärverbrennungszone 26 über eine vorgegebene Höhe, beispielsweise 20 cm) dieser gleichbleibend ausgestaltet sein.

Damit ist vorliegend eine oval-zylindrische Primärverbrennungszone 26 der Brennkammer 24 vorgesehen, die nach CFD-Berechnungen eine deutlich gleichmäßigere und bessere Luftverteilung in der Brennkammer 24 ermöglicht als bei rechteckigen Brennkammern des Stands der Technik. Die fehlenden Toträume vermeiden zudem Zonen in der Brennkammer mit schlechter Luftdurchströmung, was die Effizienz steigert und die Schlackebildung verringert.

Ebenso ist die Düse 203 zwischen der Primärverbrennungszone 26 und der Sekundärverbrennungszone 27 als ovale oder annähernd kreisförmige Verengung ausgestaltet, um ebenso die Strömungsverhältnisse zu optimieren. Der vorstehend erläuterte Drall der Strömung in der Primärverbrennungszone 26 führt zu einem helixförmig nach oben gerichteten Strömungsverlauf, wobei eine ebenso ovale oder annähernd kreisförmige Düse diesen Strömungsverlauf begünstigt, und nicht wie übliche rechteckige Düsen stört. Diese optimierte Düse 203 bündelt die nach oben strömende Luft und sorgt für eine gleichmäßige Zuströmung in die Sekundärverbrennungszone 27. Dies verbessert den Verbrennungsvorgang und erhöht die Effizienz.

Zudem wird vorliegend der Strömungsverlauf in der Sekundärverbrennungszone 27 und aus der Sekundärverbrennungszone 27 zu den Kesselrohren 32 optimiert, wie nachstehend näher erläutert.

Die Brennkammerschräge 202 der Fig. 4, welche ohne Bezugszeichen auch in den Fig. 2 und 3 zu erkennen ist und an der sich die Brennkammer 25 (bzw. deren Querschnitt) von unten nach oben hin zumindest annähernd linear verjüngt, sorgt nach CFD-Berechnungen für eine Vergleichmäßigung der Rauchgasströmung in Richtung der Wärmetauscheinrichtung 4, womit deren Effizienz verbessert werden kann. Dabei verjüngt sich die horizontale Querschnittsfläche der Brennkammer 25 von Anfang bis Ende der Brennkammerschräge 202 bevorzugt zumindest um 5%. Die Brennkammerschräge 202 ist dabei auf der Seite der Brennkammer 25 zur Wärmetauscheinrichtung 4 vorgesehen, und ist an der Stelle der maximalen Verjüngung abgerundet vorgesehen. Im Stand der Technik üblich sind parallele bzw. gerade Brennkammerwände ohne eine Verjüngung (um die Rauchgasströmung nicht zu behindern).

Die Umlenkung des Rauchgasstromes vor dem Rohrbündelwärmetauscher ist derart ausgestaltet, dass eine ungleichmäßige Anströmung der Rohre bestmöglich vermieden wird, womit Temperaturspitzen in einzelnen Kesselrohren 32 niedrig gehalten werden können. In der Folge ist die Effizienz der Wärmetauscheinrichtung 4 verbessert.

Im Detail wird der gasförmige Volumenstrom des Rauchgases durch die schräge Brennkammerwandung mit einer gleichmäßigen Geschwindigkeit (auch im Falle unterschiedlicher Verbrennungszustände) zu den Wärmetauscherrohren bzw. den Kesselrohren 32 geführt. Dadurch entsteht eine gleichmäßige Wärmeverteilung der einzelnen Kesselrohre 32 betreffenden Wärmetauscherflächen. Die Abgastemperatur wird somit gesenkt und der Wirkungsgrad erhöht. Dabei ist die Strömungsverteilung insbesondere an der in der Fig. 3 dargestellten Indikatorlinie WT1 deutlich gleichmäßiger als im Stand der Technik. Die Linie WT1 stellt eine Eintrittsfläche für den Wärmetauscher 3 dar. Die Indikatorlinie WT3 gibt eine beispielshafte Querschnittslinie durch die Filtereinrichtung 4 an, in der die Strömung möglichst homogen eingerichtet ist (u.A. aufgrund von Strömungsblenden am Eingang der Filtereinrichtung 4 und aufgrund der Geometrie der Wendekammer 35).

Weiter ist im unteren Teil der Brennkammer 25 am Brennstoffbett 28 eine Zündeinrichtung 201 vorgesehen. Diese kann eine Initialzündung oder eine erneute Zündung des Brennstoffes bewirken. Es kann die Zündeinrichtung 201 ein Glühzünder sein. Die Zündeinrichtung ist vorteilhaft ortsfest und horizontal seitlich versetzt zum Ort der Einschüttung des Brennstoffs angeordnet.

Weiter kann (optional) nach dem Ausgang des Rauchgases (d.h., nach S7) aus der Filtereinrichtung eine Lamdasonde (nicht dargestellt) vorgesehen sein. Durch die Lambdasonde kann eine Steuerung (nicht dargestellt) den jeweiligen Heizwert erkennen. Die Lambdasonde kann somit für das ideale Mischverhältnis zwischen den Brennstoffen und der Sauerstoffzufuhr sorgen. Trotz unterschiedlicher Brennstoffqualitäten werden im Ergebnis eine hohe Effizienz und ein höherer Wirkungsgrad erreichbar.

Das in Fig. 5 gezeigte Brennstoffbett 28 zeigt eine grobe Brennstoffverteilung aufgrund der Zuführung des Brennstoffs von der rechten Seite der Fig. 5.

Weiter ist in den Fig. 4 und 5 eine Brennkammerdüse 203 gezeigt, die die Primärverbrennungszone 26 von der Sekundärverbrennungszone 27 trennt und die Rauchgasströmung beschleunigt und bündelt. Dadurch wird die Rauchgasströmung besser durchmischt und kann in der Sekundärverbrennungszone 27 effizienter verbrennen. Das Flächenverhältnis der Brennkammerdüse 203 liegt in einem Bereich von 25% bis 45%, beträgt jedoch bevorzugt 30% bis 40%, und ist idealerweise 36 % +- 1% (Verhältnis der gemessenen Eingangsfläche zur gemessenen Ausgangsfläche der Düse 203).

Mithin stellen die vorstehenden Angaben zur Brennkammergeometrie der Primärverbrennungszone 26 zusammen mit der Geometrie der Düse 203 eine vorteilhafte Weiterbildung der vorliegenden Offenbarung dar.

### (Brennkammersteine)

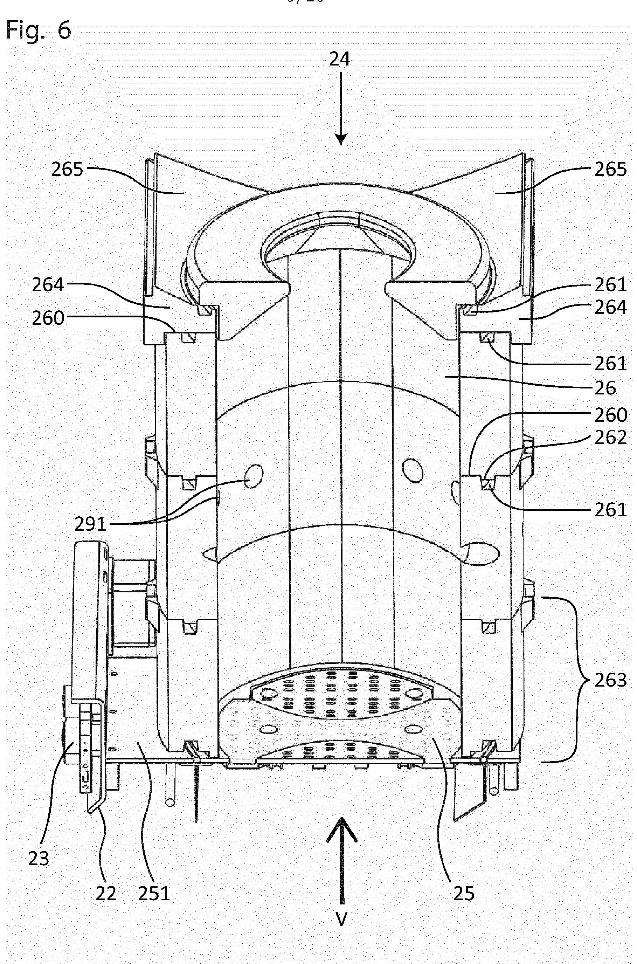

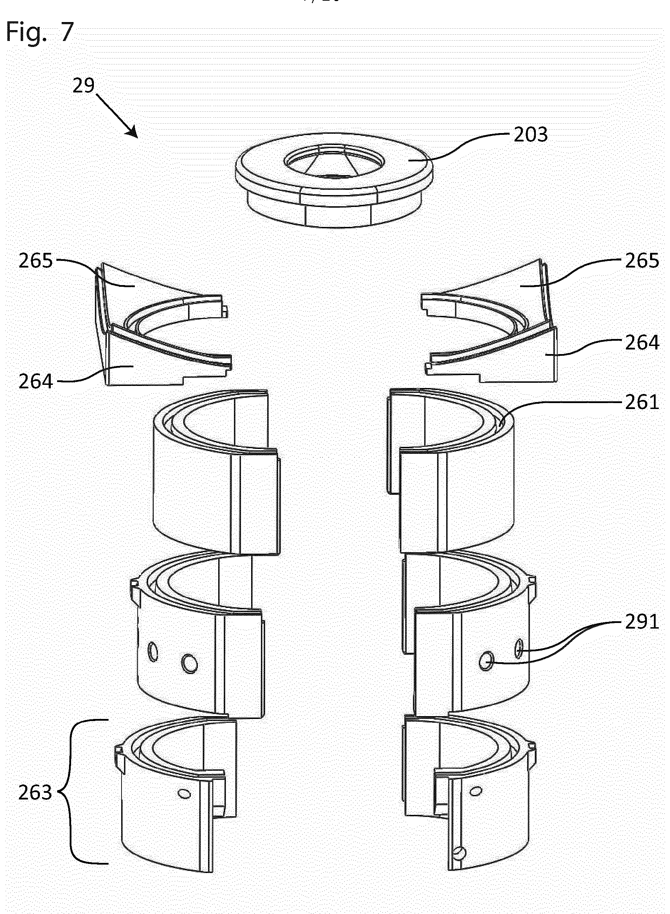

Die Fig. 6 zeigt eine dreidimensionale Schnittansicht (von schräg oben) auf die Primärverbrennungszone 26 der Brennkammer 24 mit dem Drehrost 25, und insbesondere auf die besondere Ausgestaltung der Brennkammersteine 29. Die Fig. 7 zeigt entsprechend zur Fig. 6 eine Explosionsdarstellung der Brennkammersteine 29. Die Ansichten der Fig. 6 und 7 können bevorzugt mit den vorstehend aufgeführten Abmessungen der Fig. 4 und 5 ausgeführt sein. Dies ist jedoch nicht zwingend der Fall.

Die Kammerwand der Primärverbrennungszone 26 der Brennkammer 24 ist mit einer Mehrzahl von Brennkammersteinen 29 in einem modularen Aufbau vorgesehen, was unter anderem die Fertigung und die Wartung erleichtert. Die Wartung wird insbesondere durch die Möglichkeit der Entnahme einzelner Brennkammersteine 29 erleichtert.

An den Auflageflächen 260 der Brennkammersteine 29 sind formschlüssige Nuten 261 und Vorsprünge 262 (in Fig. 6 sind zur Vermeidung von Redundanzen in den Figuren exemplarisch nur jeweils ein paar dieser bezeichnet) vorgesehen, um eine mechanische und weitgehend luftdichte Verbindung zu schaffen, um wiederum das Eindringen von störender Fremdluft zu vermeiden. Bevorzugt bilden je zwei zumindest weitgehend symmetrische Brennkammersteine (mit Ausnahme eventuell der Öffnungen für das Rezi-Gas) einen vollständigen Ring aus. Weiter sind bevorzugt drei Ringe aufeinandergestapelt, um die oval-zylindrische oder alternativ auch zumindest annähernd kreisförmige (letzteres ist nicht dargestellt und fällt nicht unter die Patentansprüche) Primärverbrennungszone 26 der Brennkammer 24 auszubilden.

Als oberer Abschluss sind drei weitere Brennkammersteine 29 vorgesehen, wobei die ringförmige Düse 203 durch zwei Halterungssteine 264 gelagert wird, die formschlüssig auf den oberen Ring 263 aufgesetzt werden. Bei allen Auflageflächen 260 sind Nuten 261 entweder für passende Vorsprünge 262 und/oder zur Einfügung von geeignetem Dichtmaterial vorgesehen.

Die Halterungssteine 264, welche bevorzugt symmetrisch ausgebildet sind, können bevorzugt eine nach innen geneigte Schräge 265 aufweisen, um ein Abkehren von Flugasche auf den Drehrost 25 zu vereinfachen.

Der untere Ring 263 der Brennkammersteine 29 liegt auf einer Bodenplatte 251 des Drehrosts 25 auf. An der Innenkannte zwischen diesem unteren Ring 263 der Brennkammersteine 29 lagert sich vermehrt Asche ab, was somit diesen Übergang vorteilhaft im Betrieb der Biomasse-Heizanlage 1 selbstständig und vorteilhaft abdichtet.

Im mittleren Ring der Brennkammersteine 29 sind die Öffnungen für die Rezirkulationsdüsen 291 vorgesehen.

Vorliegend sind drei Ringe von Brennkammersteinen 29 vorgesehen, da dies den effizientesten Weg der Herstellung und auch der Wartung darstellt. Alternativ können auch 2, 4 oder 5 solcher Ringe vorgesehen sein.

Die Brennkammersteine 29 bestehen vorzugsweise aus Hochtemperatur-Siliziumkarbid, wodurch diese sehr verschleißfest sind.

Die Brennkammersteine 29 sind als Formsteine vorgesehen. Die Brennkammersteine 29 sind derart geformt, dass das Innenvolumen der Primärverbrennungszone 26 der Brennkammer 24 einen ovalen Horizontalquerschnitt aufweist, womit durch eine ergonomische Formgebung Totecken bzw. Toträume vermieden werden, die üblicherweise von der Primärluft nicht optimal durchströmt werden, wodurch der dort vorhandene Brennstoff nicht optimal verbrannt wird. Aufgrund der vorliegenden Formgebung der Brennkammersteine 29 wird die Durchströmung mit Primärluft und folglich die Effizienz der Verbrennung verbessert.

Der ovale Horizontalquerschnitt der Primärverbrennungszone 26 der Brennkammer 24 ist bevorzugt ein punktsymmetrisches und/oder regelmäßiges Oval mit dem kleinsten Innendurchmesser BK3 und dem größten Innendurchmesser BK11. Diese Maße waren das Ergebnis der Optimierung der Primärverbrennungszone 26 der Brennkammer 24 mittels CFD-Simulation und von praktischen Versuchen.

### (Drehrost)

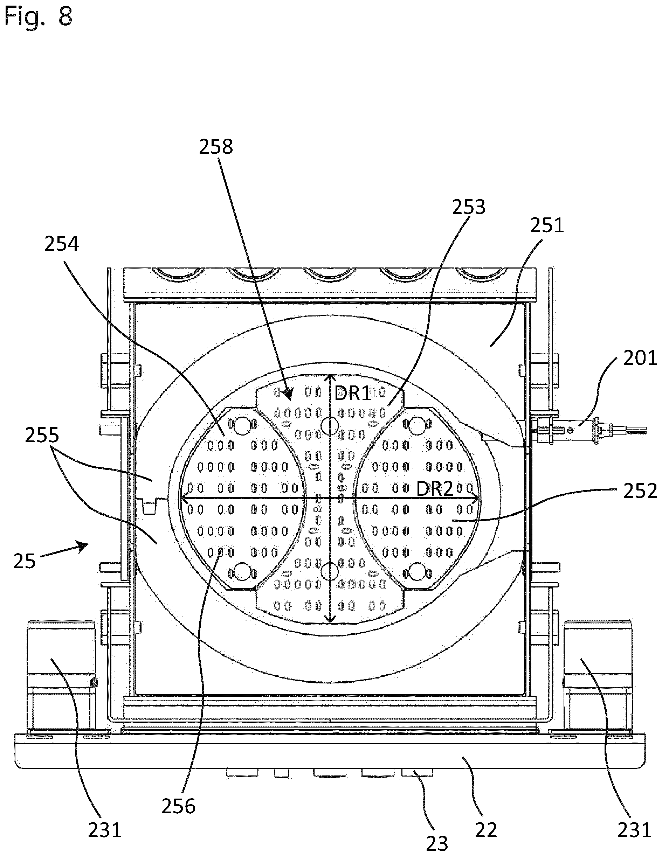

Fig. 8 zeigt eine Aufsicht auf den Drehrost 25 von oben aus Sicht der Schnittlinie A1 der Fig. 2.

Die Aufsicht der Fig. 8 kann bevorzugt mit den vorstehend aufgeführten Abmessungen ausgeführt sein. Dies ist jedoch nicht zwingend der Fall.

Der Drehrost 25 weist die Bodenplatte 251 als Basiselement auf. In einer grob ovalförmigen Öffnung der Bodenplatte 251 ist ein Übergangselement 255 vorgesehen, welches einen Zwischenraum zwischen einem ersten Drehrostelement 252, einem zweiten Drehrostelement 253 und einem dritten Drehrostelement 254 überbrückt, welche drehbar gelagert sind. Damit ist der Drehrost 25 als Drehrost mit drei Einzelelementen vorgesehen, d.h., dieser kann auch als 3-fach Drehrost bezeichnet werden. In den Drehrostelementen 252, 253 und 254 sind Luftlöcher zur Durchströmung mit Primärluft vorgesehen.

Die Drehrostelemente 252, 253 und 254 sind flache und hitzebeständige Metallplatten, beispielsweise aus einem Metallguss, die auf deren Oberseite eine zumindest weitgehend eben konfigurierte Oberfläche aufweisen und an deren Unterseite mit den Lagerachsen 81 beispielsweise über Zwischenhalterungselemente verbunden sind. Von oben betrachtet weisen die Drehrostelemente 252, 253 und 254 gekrümmte und komplementäre Seiten bzw. Umrisse auf.

Insbesondere können die Drehrostelemente 252, 253, 254 zueinander komplementäre und gekrümmte Seiten aufweisen, wobei vorzugsweise das zweite Drehrostelement 253 jeweils zu dem benachbarten ersten und dritten Drehrostelement 252, 254 konkave Seiten aufweist, und vorzugsweise das erste und dritte Drehrostelement 252, 254 jeweils zu dem zweiten Drehrostelement 253 hin eine konvexe Seite aufweist. Damit wird die Brecherfunktion der Drehrostelemente verbessert, da die Länge des Bruchs vergrößert wird, und die zum Brechen wirkenden Kräfte (ähnlich wie bei einer Schere) gezielter angreifen.

Die Drehrostelemente 252, 253 und 254 (sowie deren Umfassung in Form des Übergangselements 255) weisen gemeinsam betrachtet in der Aufsicht eine annähernd ovale Außenform auf, womit hier wiederum Totecken bzw. Toträume vermieden werden, in denen eine nicht optimale Verbrennung stattfinden könnte oder sich Asche unerwünscht ansammeln könnte. Die optimalen Abmessungen dieser Außenform der Drehrostelemente 252, 253 und 254 sind in Fig. 8 mit den Doppelpfeilen DR1 und DR2 bezeichnet. Bevorzugt, aber nicht ausschließlich, sind DR1 und DR2 wie folgt definiert:
DR1 = 288 mm +- 40 mm, bevorzugt +-20 mm
DR2 = 350 mm +- 60 mm, bevorzugt +- 20 mm

Diese Werte haben sich bei den CFD-Simulationen und dem folgenden Praxistest als Optimalwerte (-bereiche) herausgestellt. Diese Maße korrespondieren mit denen der Fig. 4 und 5. Diese Maße sind insbesondere für die Verbrennung von unterschiedlichen Brennstoffen bzw. den Brennstoffarten Hackgut und Pellets (Hybridfeuerung) in einem Leistungsbereich von 20 bis 200 kW vorteilhaft.

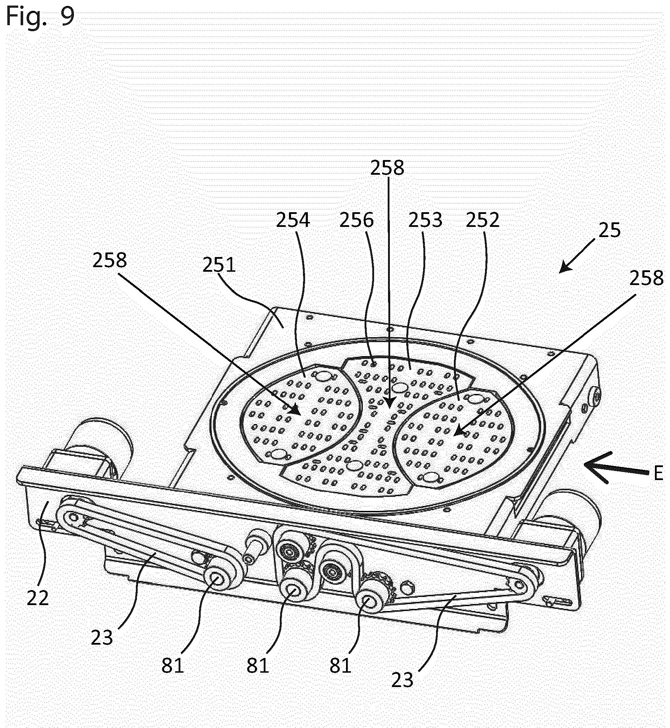

Dabei weist der Drehrost 25 eine ovale Verbrennungsfläche auf, die für die Brennstoffverteilung, die Luftdurchströmung des Brennstoffs und den Abbrand des Brennstoffs günstiger ist als eine übliche rechteckige Verbrennungsfläche. Die Verbrennungsfläche 258 wird im Kern durch die Oberflächen der Drehrostelemente 252, 253 und 254 (im horizontalen Zustand) gebildet. Die Verbrennungsfläche ist somit die nach oben zeigende Oberfläche der Drehrostelemente 252, 253 und 254. Diese ovale Verbrennungsfläche entspricht vorteilhaft der Brennstoffauflagefläche, wenn diese seitlich auf den Drehrost 25 aufgebracht bzw. aufgeschoben wird (vgl. der Pfeil E der Fig. 9, 10 und 11). Insbesondere kann die Brennstoffzufuhr aus einer Richtung erfolgen, die parallel zu einer längeren Mittelachse (Hauptachse) der ovalen Verbrennungsfläche des Drehrosts 25 liegt.

Das erste Drehrostelement 252 und das dritte Drehrostelement 254 können bevorzugt in deren Verbrennungsfläche 258 identisch ausgebildet sein. Weiter können das erste Drehrostelement 252 und das dritte Drehrostelement 254 identisch oder baugleich zueinander sein. Dies ist beispielsweise in Fig. 9 zu sehen, wobei das erste Drehrostelement 252 und das dritte Drehrostelement 254 die gleiche Form auf weisen.

Weiter ist das zweite Drehrostelement 253 zwischen dem ersten Drehrostelement 252 und dem dritten Drehrostelement 254 angeordnet.

Bevorzugt ist der Drehrost 25 mit einer annähernd punktsymmetrischen ovalen Verbrennungsfläche 258 vorgesehen.

Ebenso kann der Drehrost 25 eine annähernd elliptische Verbrennungsfläche 258 ausbilden, wobei DR2 die Maße von deren Hauptachse und DR1 die Maße von deren Nebenachse ist.

Weiter kann der Drehrost 25 eine annähernd ovale Verbrennungsfläche 258 aufweisen, welche achsensymmetrisch in Bezug auf eine Mittenachse der Verbrennungsfläche 258 ist.

Weiter kann der Drehrost 25 eine annähernd kreisförmige Verbrennungsfläche 258 aufweisen, wobei dies geringfügige Nachteile bei der Brennstoffzuführung und der - verteilung nach sich zieht.

Weiter sind zwei Motoren bzw. Antriebe 231 der Drehmechanik 23 vorgesehen, mit denen die Drehrostelemente 252, 253 und 254 entsprechend gedreht werden können. Näheres zur besonderen Funktion und zu den Vorteilen des vorliegenden Drehrosts 25 wird später mit Bezug auf die Figuren 9, 10 und 11 beschrieben.

Insbesondere bei Pelletheizungen kann es vermehrt zu Ausfällen durch SchlackeBildung in der Brennkammer 24, insbesondere auf dem Drehrost 25, kommen. Schlacke entsteht bei einem Verbrennungsvorgang immer dann, wenn in der Glut Temperaturen über dem Ascheschmelzpunkt erreicht werden. Die Asche wird dann weich, verklebt und bildet nach dem Abkühlen feste, dunkel gefärbte Schlacke. Dieser auch als Versinterung bezeichnete Vorgang ist bei der Biomasse-Heizanlage 1 unerwünscht, da es durch die Anreicherung von Schlacke in der Brennkammer 24 zu einer Funktionsstörung kommen kann: sie schaltet sich ab. Die Brennkammer 24 muss üblicherweise geöffnet werden und die Schlacke muss entfernt werden.

Der Ascheschmelzunkt hängt ganz wesentlich von dem verwendeten Brennmaterial ab. Fichtenholz hat beispielsweise einen Ascheschmelzpunkt von ca. 1200 °C. Doch auch der Ascheschmelzpunkt eines Brennstoffes kann starken Schwankungen unterliegen. Je nach Menge und Zusammensetzung der im Holz enthaltenen Mineralien ändert sich das Verhalten der Asche im Verbrennungsprozess.

Ein weiterer Faktor, der die Schlackebildung beeinflussen kann, sind Transport und Lagerung der Holzpellets oder der Hackschnitzel. Diese sollten nämlich möglichst unbeschädigt in die Brennkammer 24 gelangen. Sind die Holzpellets bereits zerbröselt, wenn sie in den Verbrennungsprozess gelangen, so erhöht sich dadurch die Dichte des Glutbetts. Stärkere Schlackebildung ist die Folge. Insbesondere der Transport vom Lagerraum zur Brennkammer 24 ist hier von Bedeutung. Besonders lange Wege, sowie Bögen und Winkel, führen zu einer Beschädigung der Holzpellets.

Ein weiterer Faktor betrifft die Führung des Verbrennungsvorgangs. Bislang war man bestrebt, die Temperaturen eher hoch zu halten, um einen möglichst hohen Ausbrand und niedrige Emissionen zu erzielen. Durch eine optimierte Brennkammergeometrie und Geometrie der Verbrennungszone 258 des Drehrosts 25 ist es möglich, die Verbrennungstemperatur niedriger zu halten, und somit die Schlackebildung zu verringern.

Zudem kann entstehende Schlacke (und auch die Asche) durch die besondere Formgebung und die Funktionalität des vorliegenden Drehrosts 25 vorteilhaft entfernt werden. Dies wird nun mit Bezug auf die Figuren 9, 10 und 11 näher erläutert.

Die Figuren 9, 10 und 11 zeigen eine dreidimensionale Ansicht des Drehrosts 25 mit der Bodenplatte 251, dem ersten Drehrostelement 252, dem zweiten Drehrostelement 253 und dem dritten Drehrostelement 254. Die Ansichten der Fig. 9, 10 und 11 können bevorzugt mit den vorstehend aufgeführten Abmessungen korrespondieren. Dies ist jedoch nicht zwingend der Fall.

Diese Ansicht zeigt den Drehrost 25 als freigestelltes Einschubteil mit Drehrostmechanik 23 und Antrieb(en) 231. Der Drehrost 25 ist mechanisch derart vorgesehen, dass er nach Art des Baukastensystems einzeln vorgefertigt werden kann, und als Einschubteil in eine vorgesehene längliche Öffnung des Kessels 11 eingeführt und eingebaut werden kann. Dies erleichtert zudem die Wartung dieses verschleißanfälligen Teils. Damit kann der Drehrost 25 bevorzugt modular ausgebildet sein, wobei dieser als Komplettteil mit Drehrostmechanik 23 und Antrieb 231 schnell und effizient entnommen und wieder eingesetzt werden kann. Der modularisierte Drehrost 25 kann damit auch mittels Schnellverschlüssen montiert und demontiert werden. Im Gegensatz dazu sind die Drehroste des Stands der Technik regelmäßig fest montiert, und somit schwer zu warten oder zu montieren.

Der Antrieb 231 kann zwei getrennt ansteuerbare Elektromotoren aufweisen. Diese sind vorzugsweise seitlich an der Drehrostmechanik 23 vorgesehen. Die Elektromotoren können Untersetzungsgetriebe aufweisen. Weiter können Endanschlagsschalter vorgesehen sein, die Endanschläge jeweils für die Endpositionen der Drehrostelemente 252, 253 und 254 vorsehen.

Die Einzelkomponenten der Drehrostmechanik 23 sind austauschbar vorgesehen. Beispielsweise sind die Zahnräder aufsteckbar vorgesehen. Dies erleichtert die Wartung und auch einen Seitenwechsel der Mechanik bei der Montage, falls erforderlich.

In den Drehrostelementen 252, 253 und 254 des Drehrosts 25 sind die schon erwähnten Öffnungen 256 vorgesehen. Die Drehrostelemente 252, 253 und 254 können über deren jeweilige Lagerachsen 81, die über die Drehmechanik 23 von dem Antrieb 231, vorliegend den beiden Motoren 231, angetrieben werden, jeweils zumindest um 90 Grad, bevorzugt zumindest um 120 Grad, noch mehr bevorzugt um 170 Grad um die jeweilige Lager- bzw. Drehachse 81 gedreht werden. Dabei kann der maximale Drehwinkel 180 Grad, oder auch etwas weniger als 180 Grad sein, so wie das die Rostlippen 257 zulassen. Dabei ist die Drehmechanik 23 derart eingerichtet, dass das dritte Drehrostelement 254 einzeln und unabhängig vom ersten Drehrostelement 252 und vom zweiten Drehrostelement 243 gedreht werden kann, und dass das erste Drehrostelement 252 und das zweite Drehrostelement 243 gemeinsam und unabhängig von dem dritten Drehrostelement 254 gedreht werden können. Die Drehmechanik 23 kann beispielsweise mittels Laufrädern, Zahn- oder Antriebsriemen und/oder Zahnrädern entsprechend vorgesehen sein.

Die Drehrostelemente 252, 253 und 254 können bevorzugt als Gussrost mit einem Laserzuschnitt hergestellt werden, um eine exakte Formhaltigkeit sicherzustellen. Dies insbesondere um die Luftführung durch das Brennstoffbett 28 so genau wie möglich zu definieren, und störende Luftströmungen, beispielsweise Luftsträhnen an den Rändern der Drehrostelemente 252, 253 und 254, zu vermeiden.

Die Öffnungen 256 in den Drehrostelementen 252, 253 und 254 sind derart eingerichtet, dass diese für das übliche Pelletmaterial und/oder die üblichen Hackschnitzel klein genug sind, dass diese nicht hindurchfallen, und dass diese groß genug sind, dass der Brennstoff gut mit Luft beströmt werden kann.

Fig. 9 zeigt nun den Drehrost 25 in geschlossener Position, wobei alle Drehrostelemente 252, 253 und 254 horizontal ausgerichtet bzw. geschlossen sind. Dies ist die Position im Regelbetrieb. Durch die gleichmäßige Anordnung der Vielzahl der Öffnungen 256 wird eine gleichmäßige Durchströmung des Brennstoffbetts 28 (dieses ist in Fig. 9 nicht dargestellt) auf dem Drehrost 25 sichergestellt. Insofern kann hier der optimale Verbrennungszustand hergestellt werden. Der Brennstoff wird aus Richtung des Pfeiles E auf den Drehrost 25 aufgebracht; insofern wird der Brennstoff von der rechten Seite der Fig. 9 auf den Drehrost 25 hinaufgeschoben.

Im Betrieb sammelt sich Asche und oder Schlacke auf dem Drehrost 25 und insbesondere auf den Drehrostelementen 252, 253 und 254 an. Mit dem vorliegenden Drehrost 25 kann eine effiziente Abreinigung des Drehrosts 25 erfolgen.

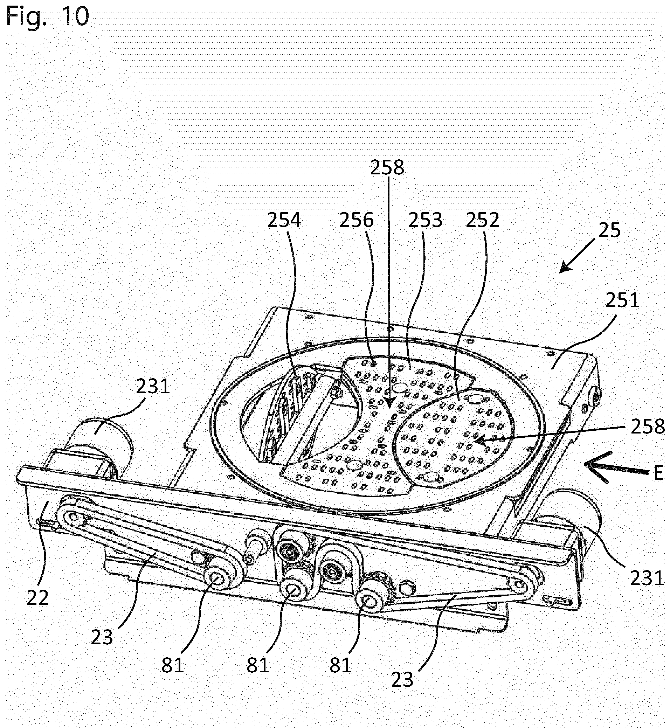

Fig. 10 zeigt den Drehrost in dem Zustand einer Teilabreinigung des Drehrosts 25 im Gluterhaltungsbetrieb. Dazu wird nur das dritte Drehrostelement 254 gedreht. Dadurch, dass nur eines der drei Drehrostelemente gedreht wird, erhält sich die Glut auf dem ersten und dem zweiten Drehrostelement 252, 253, während zugleich die Asche und Schlacke nach unten aus der Brennkammer 24 hinausfallen kann. In der Folge ist keine externe Zündung zur Wiederaufnahme des Betriebs erforderlich (dies spart bis zu 90% Zündenergie). Eine weitere Folge sind eine Verschleißminderung der Zündeinrichtung (beispielsweise eines Zündstabes) und eine Stromersparnis. Weiter kann vorteilhaft eine Aschereinigung im Betrieb der Biomasse-Heizanlage 1 erfolgen.

Fig. 10 zeigt ebenso einen Zustand der Gluterhaltung während einer (oft schon ausreichenden) Teilabreinigung. Damit kann der Betrieb der Anlage 1 vorteilhaft kontinuierlicher erfolgen, womit im Gegensatz zur üblichen Vollabreinigung eines herkömmlichen Rostes keine langwierige vollständige Zündung erfolgen muss, die einige zehn Minuten in Anspruch nehmen kann.

Zudem wird eine potentielle Schlacke an den beiden Außenkanten des dritten Drehrostelements 254 bei der Drehung dessen (auf-)gebrochen, wobei aufgrund der kurvenförmigen Außenkanten des Drehrostelements dritten 254 nicht nur die Abscherung über eine größere Gesamtlänge als bei herkömmlichen rechteckigen Elementen des Stands der Technik erfolgt, sondern auch mit einer ungleichmäßigen Bewegungsverteilung in Bezug auf die Außenkante (in der Mitte erfolgt eine größere Bewegung als an den unteren und oberen Rändern). Damit ist die Brecherfunktion des Drehrosts 25 deutlich verstärkt.

In Fig. 10 sind (beidseitige) Rostlippen 257 des zweiten Drehrostelements 253 erkennbar. Diese Rostlippen 257 sind derart eingerichtet, dass das erste Drehrostelement 252 und das dritte Drehrostelement 254 im geschlossenen Zustand dieser auf der Oberseite der Rostlippen 257 aufliegen, und somit die Drehrostelemente 252, 253 und 254 zueinander spaltfrei vorgesehen und damit dichtend vorgesehen sind. Damit werden Luftsträhnen und unerwünschte Primärluftströmungen durch das Glutbett vermieden. Vorteilhaft wird damit die Effizienz der Verbrennung verbessert.

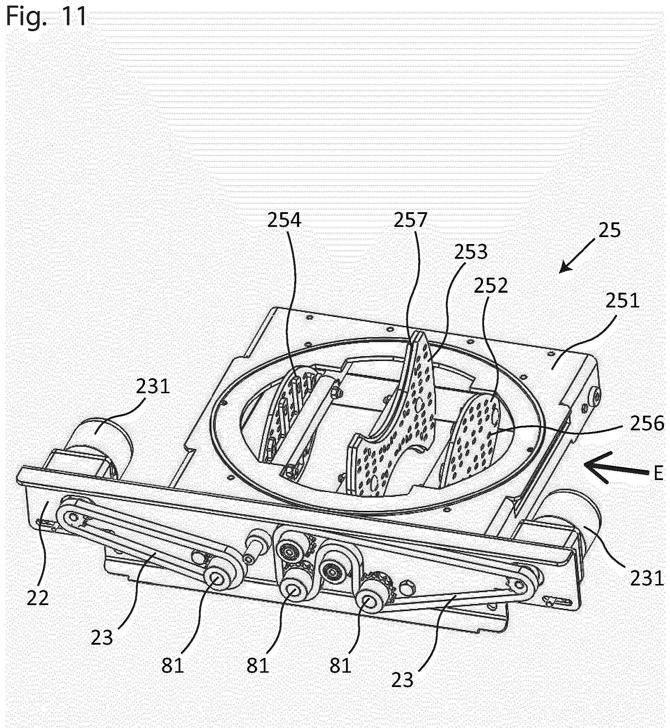

Fig. 11 zeigt den Drehrost 25 im Zustand der Universalabreinigung, welche bevorzugt während eines Anlagenstillstands durchgeführt wird. Dabei werden alle drei Drehrostelemente 252, 253 und 254 gedreht, wobei das erste und zweite Drehrostelement 252, 253 bevorzugt in die entgegengesetzte Richtung gedreht werden wie das dritte Drehrostelement 254. Realisiert wird damit einerseits eine vollständige Entleerung des Drehrosts 25, und andererseits wird die Schlacke nunmehr an vier ungeraden Außenkanten aufgebrochen. Mit anderen Worten wird eine vorteilhafte 4-fache Brecherfunktion realisiert. Das vorstehend in Bezug auf Fig. 9 zu der Geometrie der Außenkanten Erläuterte gilt auch in Bezug auf Fig. 10.

Zusammengefasst realisiert der vorliegende Drehrost 25 neben dem Normalbetrieb (vgl. Fig. 9) vorteilhaft zwei unterschiedliche Arten der Abreinigung (vgl. Fig. 10 und 11), wobei die Teilabreinigung eine Abreinigung während des Betriebs der Anlage 1 erlaubt.

Im Vergleich dazu sind marktübliche Drehrostsysteme nicht ergonomisch und haben durch ihre rechteckige Geometrie nachteilige Totecken, in welchen die Primärluft den Brennstoff nicht optimal durchströmen kann. An diesen Ecken kommt es gehäuft zu einer Schlackenbildung. Dies sorgt für eine schlechtere Verbrennung mit einem schlechteren Wirkungsgrad.

Der vorliegende einfache mechanische Aufbau des Drehrosts 25 gestaltet diesen robust, zuverlässig und langlebig.

### (Wärmetauscher)

Zur Optimierung des Wärmetauschers 3 wurden, in Synergie mit den vorstehend beschriebenen Brennkammergeometrien, wiederum CFD-Simulationen und Praxistest durchgeführt. Dabei wurde auch überprüft, inwieweit ein Federturbulator oder ein Bandturbulator oder eine Kombination aus beidem die Effizienz des Wärmetauschvorganges verbessern können, ohne jedoch den Druckverlust in dem Wärmetauscher 3 zu groß werden zu lassen. Turbulatoren verstärken die Turbulenzbildung in den Kesselrohren 32, womit die Strömungsgeschwindigkeit gesenkt, die Verweildauer des Rauchgases im Kesselrohr 32 erhöht und damit die Effizienz des Wärmeaustauschs erhöht wird. Allerdings wird der Druckverlust auch umso größer, je turbulenter die Strömung ist.

Vorliegend wurde zudem für alle mit Rauchgas in Berührung stehenden Flächen eine leichte Verschmutzung (sogenanntes Fouling mit einer Dicke von 1 mm) berücksichtigt. Die Emissivität einer derartigen Fouling-Schicht wurde mit 0,6 angesetzt.

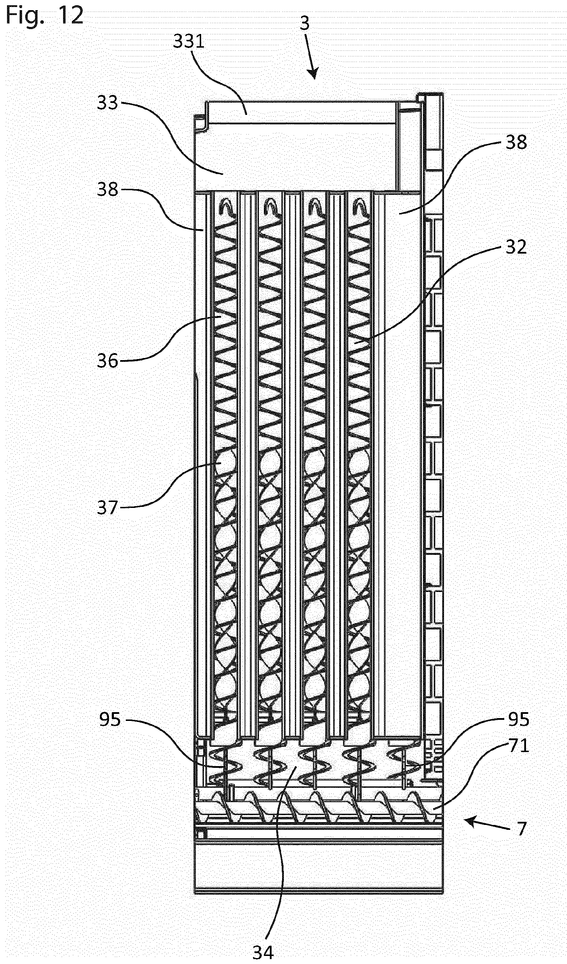

Das Ergebnis dieser Optimierung ist in Fig. 12 dargestellt, die eine Ausschnitt-Detailansicht der Fig. 2 ist.

Der Wärmetauscher 3 weist ein vertikal angeordnetes Bündel an Kesselrohren 32 auf, wobei bevorzugt injedem Kesselrohr 32 jeweils sowohl ein Feder- als auch ein Band- oder Spiralturbulator vorgesehen ist. Der jeweilige Federturbulator 36 erstreckt sich bevorzugt über die gesamte Länge des jeweiligen Kesselrohrs 32 und ist federförmig ausgestaltet. Der jeweilige Bandturbulator 37 erstreckt sich bevorzugt über etwa die halbe Länge des jeweiligen Kesselrohrs 32 und weist ein sich spiralförmig in Achsrichtung des Kesselrohrs 32 erstreckendes Band mit einer Materialstärke von 1,5 mm bis 3 mm auf. Weiter kann der jeweilige Bandturbulator 37 auch etwa 35 % bis 65 % der Länge des jeweiligen Kesselrohrs 32 lang sein. Der jeweilige Bandturbulator 37 ist bevorzugt mit einem Ende am stromabwärtigen Ende des jeweiligen Kesselrohrs 32 angeordnet. Die Kombination aus Feder- und Band- bzw. Spiralturbulator kann auch aus Doppelturbulator bezeichnet werden.

Bandturbulatoren 37 sind vorgesehen, da der Bandturbulator 37 die Turbulenzwirkung im Kesselrohr 32 erhöht und ein über den Rohrquerschnitt betrachtet homogeneres Temperatur- und Geschwindigkeitsprofil hervorruft, währenddessen das Rohr ohne einen Bandturbulator bevorzugt eine heiße Strähne mit höheren Geschwindigkeiten im Rohrzentrum ausbildet, die sich bis zum Austritt des Kesselrohrs 32 fortsetzt, was sich negativ auf die Effizienz der Wärmeübertragung auswirken würde. Damit verbessern die Bandturbulatoren 37 im unteren Bereich der Kesselrohre 32 die konvektive Wärmeübertragung.

Als Optimum bevorzugt werden vorliegend 22 Kesselrohre mit einem Durchmesser von 76,1 mm und 3,6 mm Wandstärke verwendet.

Der Druckverlust kann in diesem Fall weniger als 25 Pa betragen. Der Federturbulator 36 weist in diesem Fall idealerweise einen Außendurchmesser von 65 mm, eine Steigung von 50 mm, und ein Profil von 10 x 3 mm auf. Der Bandturbulator 37 kann in diesem Fall einen Außendurchmesser von 43 mm, eine Steigung von 150 mm und ein Profil von 43 x 2 mm aufweisen. Eine Blechstärke des Bandturbulators kann 2 mm betragen.

Eine gute Effizienz wird mittels 18 bis 24 Kesselrohren und einen Durchmesser von 70 bis 85 mm bei einer Wandstärke von 3 bis 4,5 mm erreicht. Dabei können entsprechend angepasste Feder- und Bandturbulatoren zum Einsatz kommen.

Allerdings können zur Erreichung einer ausreichenden Effizienz zwischen 14 und 28 Kesselrohre 32 mit einem Durchmesser zwischen 60 und 80 mm mit einer Wandstärke von 2 bis 5 mm verwendet werden. Der Druckverlust kann in diesen Fällen zwischen 20 und 40 Pa betragen, und ist mithin als positiv zu bewerten. Der Außendurchmesser, die Steigung und das Profil der Feder- und Bandturbulatoren 36, 37 ist entsprechend angepasst vorgesehen.

Die gewünschte Zieltemperatur am Austritt der Kesselrohre 32 kann bevorzugt 180 Grad Celsius +- 15 Grad Celsius betragen.

### (Reinigungseinrichtung)

Fig. 13 zeigt eine Reinigungseinrichtung 9, mit der sowohl der Wärmetauscher 3 als auch die Filtereinrichtung 4 automatisch (ab-) gereinigt werden können. Die Fig. 13 stellt die Reinigungseinrichtung aus dem Kessel 11 der Anschaulichkeit halber herausgestellt dar.

Die Reinigungseinrichtung 9 weist zwei Reinigungsantriebe 91, vorzugsweise Elektromotoren, auf, die zwei Reinigungswellen 92 drehbar antreiben, die wiederum in einer Wellenhalterung 93 gelagert sind. Die Reinigungswellen 92 können bevorzugt auch noch an weiterer Stelle, beispielsweise an den entfernten Enden, ebenso drehbar gelagert sein. Die Reinigungswellen 92 weisen Fortsätze 94 auf, mit denen über Gelenke oder über Drehlager der Käfig 48 der Filtereinrichtung 4 und Turbulatorhalterungen 95 verbunden sind.

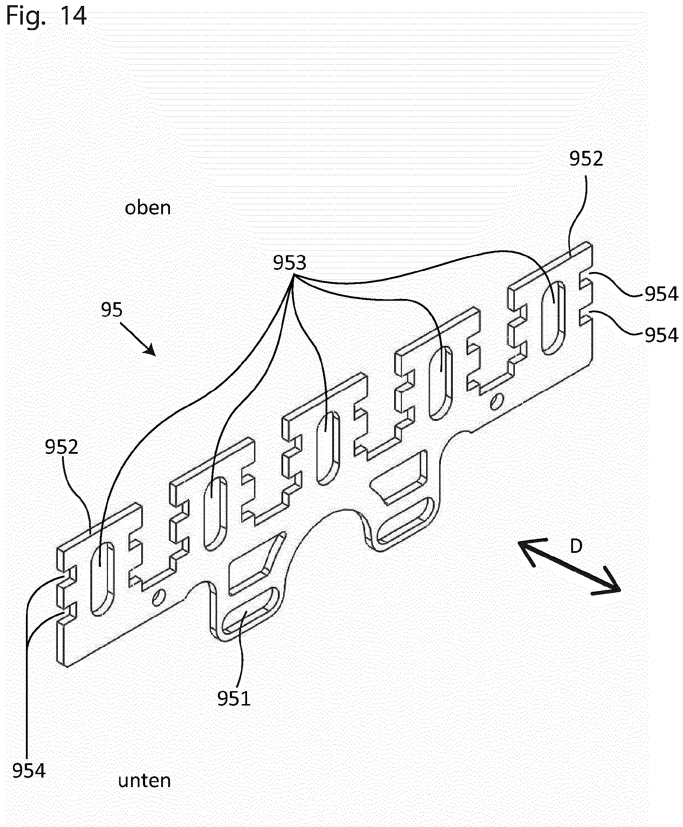

Die Turbulatorhalterung 95 ist in Fig. 14 herausgestellt und vergrößert dargestellt. Die Turbulatorhalterung 95 ist kammartig ausgestaltet und bevorzugt horizontalsymmetrisch ausgebildet. Weiter ist die Turbulatorhalterung 95 als ein flaches Metallstück mit einer Materialstärke in Dickenrichtung D zwischen 2 und 5 mm ausgebildet. Die Turbulatorhalterung 95 weist an deren Unterseite zwei Drehlageraufnahmen 951 zur Verbindung mit Drehlagerzapfen (nicht dargestellt) der Fortsätze 94 der Reinigungswellen 92 auf. Die Drehlageraufnahmen 951 weisen ein horizontales Spiel auf, in welchem sich Drehlagerzapfen oder ein Drehlagergestänge 955 hin- und bewegen kann/können. Vertikal hervorstehende Fortsätze 952 weisen eine Mehrzahl von Ausnehmungen 954 auf, in und mit denen die Doppelturbulatoren 36, 37 befestigt werden können. Die Ausnehmungen 954 können einen Abstand zueinander aufweisen, der dem Gangabstand der Doppelturbulatoren 36, 37 entspricht. In der Turbulatorhalterung 95 können zudem bevorzugt Durchlässe 953 für das Rauchgas angeordnet sein, um die Strömung aus den Kesselrohren 32 in die Filtereinrichtung 4 zu optimieren. Andernfalls würde das Flachmetall quer zur Strömung stehen, und diese zu stark behindern.

Zudem dreht sich bei der Montage des jeweiligen Federturbulators 36 inkl. des Spiralturbulators (Doppeltubulator) die Spirale durch ihr Eigengewicht automatisch in die Aufnahme der Turbulatorhalterung 95 (die auch als Aufnahmestange bezeichnet werden kann) und ist somit fixiert und gesichert. Dies erleichtert die Montage deutlich.

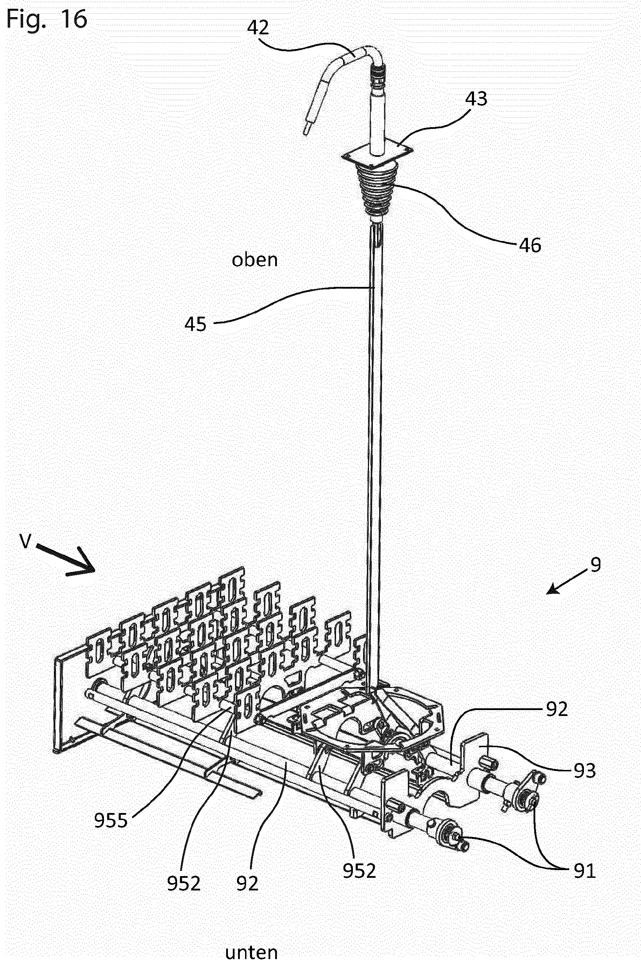

Die Figuren 15 und 16 zeigen die Abreinigungsmechanik 9 ohne den Käfig 48 in zwei unterschiedlichen Zuständen. Dabei ist die Käfighalterung 481 besser zu erkennen.

Fig. 15 zeigt die Abreinigungsmechanik 9 in einem ersten Zustand, wobei sich sowohl die Turbulatorhalterungen 95 als auch die Käfighalterung 481 in einer unteren Position befinden. An einer der Reinigungswellen 92 ist ein zweiarmiger Schlaghebel 96 mit einem Anschlagkopf 97 befestigt. Der Schlaghebel 96 kann alternativ auch ein- oder mehrarmig vorgesehen sein. Der Schlaghebel 96 mit dem Anschlagkopf 97 ist derart eingerichtet, dass dieser an das Ende der Elektrode 45 bewegt werden kann bzw. an diese anschlagen kann.

Fig. 16 zeigt die Abreinigungsmechanik 9 in einem zweiten Zustand, wobei sich sowohl die Turbulatorhalterungen 95 als auch die Käfighalterung 481 in einer oberen Position befinden.

Beim Übergang vom ersten Zustand in den zweiten Zustand (und umgekehrt) wird durch Drehung der Reinigungswellen 92 mittels der Reinigungsantriebe 91 sowohl die Turbulatorhalterung 95 als auch die Käfighalterung 481 über die Fortsätze 952 (und ein Drehlagergestänge 955) vertikal angehoben. Damit können die Doppelturbulatoren 36, 37 in den Kesselrohren 32 und auch der Käfig 48 in dem Kamin der Filtereinrichtung 4 nach oben und nach unten bewegt werden, und können die jeweiligen Wände entsprechend von Flugasche oder Ähnlichem abreinigen.

Es kann zudem der Schlaghebel 96 mit dem Anschlagkopf 97 beim Übergang vom ersten Zustand in den zweiten Zustand an das Ende der Elektrode 45 anschlagen. Dieses Anschlagen am freien (d.h., nicht aufgehängten) Ende der Elektrode 45 hat den Vorteil gegenüber herkömmlichen Rüttelmechaniken (bei diesen wird die Elektrode an deren Aufhängung bewegt), dass die Elektrode 45 entsprechend ihrer Schwingungscharakteristika nach der Anregung durch das Anschlagen selbst (im Idealfall frei) schwingen kann. Dabei bestimmt die Art des Anschlags die Schwingungen bzw. Schwingungsmodi der Elektrode 45. Es kann die Elektrode 45 von unten (d.h., aus deren Längsachsenrichtung bzw. aus deren Longitudinalrichtung) für die Erregung einer Stoßwelle oder einer Longitudinalschwingung angeschlagen werden. Es kann die Elektrode 45 aber auch seitlich (in den Figuren 15 und 16 beispielsweise aus Richtung des Pfeils V) angeschlagen werden, womit diese transversal schwingt. Oder es kann die Elektrode 45 (wie vorliegend in den Figuren 15 und 16 dargestellt) an deren Ende aus einer leicht seitlich versetzten Richtung von unten angeschlagen werden. In letzterem Fall werden eine Mehrzahl von unterschiedlichen Schwingungsarten in der Elektrode 45 (durch das Anschlagen) erzeugt, die sich im Abreinigungseffekt vorteilhaft aufaddieren und die Abreinigung in deren Effizienz verbessern. Insbesondere die Scherwirkung der Transversalschwingung an der Oberfläche der Elektrode 45 kann den Abreinigungseffekt verbessern.

Insofern kann es in der elastischen Federelektrode 45 zu einem Stoß bzw. einer Stoßwelle in Längsrichtung der bevorzugt als länglicher plattenförmiger Stab ausgeführten Elektrode 45 kommen. Ebenso kann es zu einer Transversalschwingung der Elektrode 45 aufgrund der wirkenden Querkräfte (die quer bzw. rechtwinklig zur Längsachsenrichtung der Elektrode 45 ausgerichtet sind) kommen.

Ebenso kann man mehrere Schwingungsarten gleichzeitig erzeigen. Insbesondere eine Stoßwelle und/oder Longitudinalwelle kombiniert mit einer Transversalschwingung der Elektrode 45 kann nochmals zu einer verbesserten Abreinigung der Elektrode 45 führen.

Im Ergebnis ist eine vollautomatische Abreinigung während der Entaschung in eine gemeinsame Aschebox an der Vorderseite der Heizanlage (nicht dargestellt) über die Austragungsschnecke 71 realisierbar. Ebenso kann die Federstahlelektrode 48 verschleißfrei und geräuscharm abgereinigt werden.

Weiter ist die Reinigungseinrichtung 9 auf die beschriebene Weise einfach und kostengünstig zu fertigen, und weist einen einfachen und verschleißarmen Aufbau auf.

Weiter ist die Reinigungseinrichtung 9 mit der Antriebsmechanik derart eingerichtet, dass Ascherückstände vorteilhaft schon ab dem ersten Zug der Kesselrohre 32 durch die Turbulatoren abgereinigt werden können und nach unten abfallen können.

Zudem ist die Reinigungseinrichtung 9 im unteren, sogenannten "kalten Bereich" des Kessels 11 verbaut, was den Verschleiß ebenso verringert, da die Mechanik keinen sehr hohen Temperaturen ausgesetzt ist (d.h., die thermische Belastung ist verringert). Im Gegensatz dazu wird im Stand der Technik die Reinigungsmechanik im oberen Bereich der Anlage verbaut, was den Verschleiß entsprechend nachteilig erhöht.

Durch eine regelmäßige automatisierte Abreinigung wird zudem der Wirkungsgrad der Anlage 1 verbessert, da die Oberflächen des Wärmetauschers 3 sauberer sind. Ebenso kann die Filtereinrichtung 4 effizienter arbeiten, da auch deren Oberflächen sauberer sind.

### (Modularisierung von Anlagen- und Kesselkomponenten)

Bevorzugt ist die Biomasse-Heizanlage 1 derart ausgestaltet, dass die komplette Antriebsmechanik im unteren Kesselbereich (u.a. Drehrostmechanik inkl. Drehrost, Wärmetauscherreinigungsmechanik, Antriebsmechanik für Schubboden, Mechanik für Filtereinrichtung, Reinigungskorb und Antriebswellen und Ascheaustragungsschnecke) im "Schubladenprinzip" schnell und effizient entnommen und wieder eingesetzt werden kann. Ein Beispiel hierfür ist vorstehend mit dem Drehrost 25 in Bezug auf die Fig. 9 bis 11 veranschaulicht. Dies erleichtert Wartungsarbeiten.

### (Glutbetthöhenmessung)

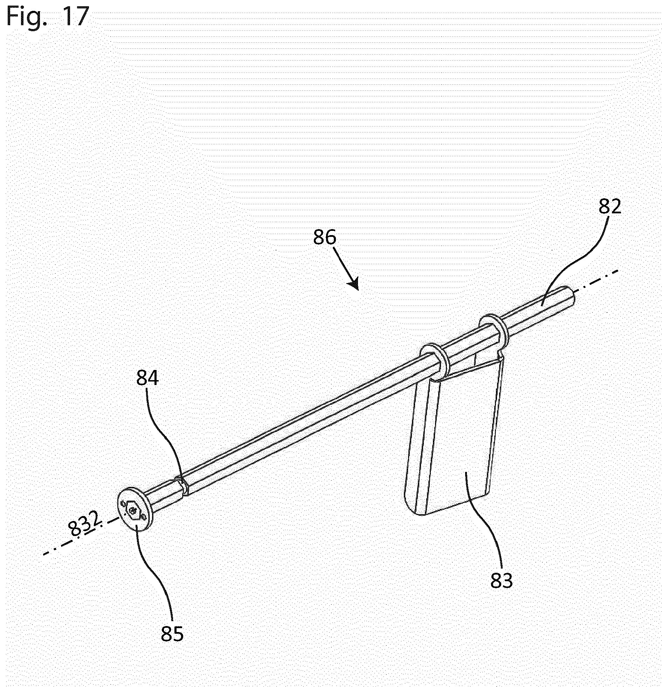

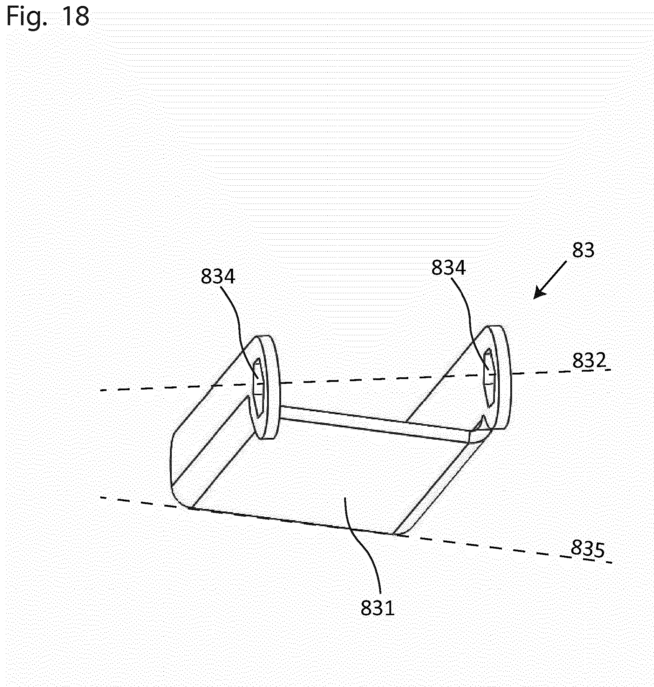

Fig. 17 zeigt eine (freigestellte) Glutbetthöhenmessmechanik 86 mit einer Brennstoff-Niveauklappe 83. Fig. 18 zeigt eine Detailansicht der Brennstoff-Niveauklappe 83 der Fig. 17.

Die Glutbetthöhenmessmechanik 86 weist im Detail eine Drehachse 82 für die Brennstoff-Niveauklappe 83 auf. Die Drehachse 82 weist eine Mittenachse 832 auf und weist an einer Seite eine Lagerkerbe 84 zur Halterung der Drehachse 82, sowie einen Sensorflansch 85 zur Befestigung eines Winkel- oder -drehsensors (nicht dargestellt) auf.

Die Drehachse 82 ist bevorzugt mit einem Sechskantprofil versehen. Die Halterung der Brennstoff-Niveauklappe 83 kann derart vorgesehen sein, dass diese aus zwei Öffnungen 834 mit einem Innensechskant besteht. Damit kann die Brennstoff-Niveauklappe 83 einfach auf die Drehachse 82 aufgesteckt und fixiert werden. Weiter kann die Brennstoff-Niveauklappe 83 ein einfaches Blechformteil sein.

Die Glutbetthöhenmessmechanik 86 ist in der Brennkammer 24, bevorzugt etwas zur Mitte versetzt, über dem Brennstoffbett 28 bzw. der Verbrennungsfläche 258 vorgesehen, dass die Brennstoff-Niveauklappe 83 in Abhängigkeit zu dem etwaig vorhandenen Brennstoff je nach Höhe des Brennstoffs bzw. Brennstoffbetts 28 angehoben wird, womit die Drehachse 82 in Abhängigkeit zu der Höhe des Brennstoffbetts 28 gedreht wird. Diese Drehung oder auch der Absolutwinkel der Drehachse 82 kann/können durch einen (nicht dargestellten) berührungslosen Dreh- und/oder Winkelsensor erfasst werden. Damit kann vorliegend eine effiziente und robuste Glutbetthöhenmessung erfolgen.

Dabei ist die Brennstoff-Niveauklappe 83 derart eingerichtet, dass diese in Bezug auf die Mittenachse 823 der Drehachse 82 angeschrägt ausgeführt ist. Im Detail kann eine Oberflächenparallele 835 einer Hauptfläche 831 der Brennstoff-Niveauklappe 83 derart angeordnet sein, dass diese winklig in Bezug auf die Mittenachse 823 der Drehachse 82 vorgesehen ist. Dieser Winkel kann bevorzugt zwischen 10 und 45 Grad betragen. Zur Winkelmessung anzumerken ist, dass die Oberflächenparallele 835 und die Mittenachse 823 derart gedacht werden, dass sich diese (in der Horizontalen projiziert) in der Mittenachse 823 zur Winkelbildung schneiden können. Weiter ist die Oberflächenparallele 835 normalerweise nicht parallel zu der Vorderkante der Brennstoff-Niveauklappe 83 ausgerichtet.

Nun wird bei der Brennstoffzuführung 6 in die Brennkammer 24 keine ebene Brennstoffverteilung verursacht, sondern es wird eher ein länglicher Hügel aufgeworfen. Mit einer angeschrägten Brennstoff-Niveauklappe 83 und einer parallelen Ausrichtung der Mittenachse 823 der Drehachse 82 zu der Fläche des Drehrosts 25 wird folglich der eher schrägen Verteilung des Brennstoffs derart Rechnung getragen, dass die Hauptfläche 831 der Brennstoff-Niveauklappe 83 flächig auf dem Brennstoffhügel bzw. Brennstoffbett 28 aufliegen kann. Durch diese flächigere Auflage der Brennstoff-Niveauklappe 83 werden Messfehler durch Unregelmäßigkeiten im Brennstoffbett 28 verringert, und die Messgenauigkeit und die Ergonomie der Messung werden verbessert.

Zudem kann mittels der vorstehend dargestellten Geometrie der Brennstoff-Niveauklappe 83 auch trotz unterschiedlichem bzw. variierendem Brennstoff (Hackgut, Pellets) die exakte Glutbetthöhe mittels berührungslosem Dreh- und/oder Winkelsensor ermittelt werden. Die ergonomisch-schräge Form passt sich ideal an den auch durch die Stokerschnecke eher schräg eingeführten Brennstoff an und sorgt für exakte Messwerte.

Mittels der Glutbetthöhenmessung kann weiter die auf der Verbrennungsfläche 258 des Drehrosts 25 verbleibende Brennstoffhöhe (und Menge) genau ermittelt werden, womit die Brennstoffzufuhr derart geregelt werden kann, dass der Verbrennungsprozess optimiert werden kann.

Zudem ist die Herstellung und Montage dieses Sensors einfach und kostengünstig.

### (Weitere Ausführungsformen)

Die Erfindung lässt neben den erläuterten Ausführungsformen und Aspekten weitere Gestaltungsgrundsätze zu. So können einzelne Merkmale der verschiedenen Ausführungsformen und Aspekte auch beliebig miteinander kombiniert werden, solange dies für den Fachmann als ausführbar ersichtlich ist.

Weiter können anstatt von nur drei Drehrostelementen 252, 253 und 254 auch zwei, vier oder mehr Drehrostelemente vorgesehen sein. Bei beispielsweise fünf Drehrostelementen könnten diese mit der gleichen Symmetrie und Funktionalität angeordnet sein, wie bei den vorgestellten drei Drehrostelementen. Zudem können die Drehrostelemente auch unterschiedlich zueinander geformt oder ausgebildet sein. Mehr Drehrostelemente haben den Vorteil, dass die Brecherfunktion verstärkt wird.

Zu den angegebenen Maßen ist anzumerken, dass auch abweichend von diesen andere Maße bzw. Maßkombinationen vorgesehen werden können.

Anstelle der konvexen Seiten der Drehrostelemente 252 und 254 können auch konkave Seiten dieser vorgesehen sein, wobei die Seiten des Drehrostelements 253 in Folge komplementär konvex geformt sein können. Dies ist funktional annähernd gleichwertig.

Als Brennstoffe der Biomasse-Heizanlage können auch andere Brennstoffe als Hackgut oder Pellets verwendet werden.

Die vorliegend offenbarte Biomasse-Heizanlage kann auch ausschließlich mit einer Art eines Brennstoffs befeuert werden, beispielsweise nur mit Pellets.

Die hierin offenbarten Ausführungsformen wurden zur Beschreibung und zum Verständnis der offenbarten technischen Sachverhalte bereitgestellt und sollen den Umfang der vorliegenden Offenbarung nicht einschränken.

### (Bezugszeichenliste)

- 1: Biomasse-Heizanlage
- 11: Kessel
- 12: Kesselfuß
- 13: Kesselgehäuse
- 14: Wasserzirkulationseinrichtung
- 2: Brenneinrichtung
- 21: erste Wartungsöffnung für Brenneinrichtung
- 22: Drehmechanikhalterung
- 23: Drehmechanik

- 24: Brennkammer
- 25: Drehrost
- 26: Primärverbrennungszone der Brennkammer
- 27: Sekundärverbrennungszone bzw. Strahlungsteil der Brennkammer
- 28: Brennstoffbett
- 29: Brennkammersteine
- A1: erste Horizontalschnittlinie
- A2: erste Vertikalschnittlinie

- 201: Zündeinrichtung
- 202: Brennkammerschräge
- 203: Brennkammerdüse

- 231: Antrieb bzw. Motor(en) der Drehmechanik

- 251: Bodenplatte des Drehrosts
- 252: Erstes Drehrostelement
- 253: Zweites Drehrostelement
- 254: Drittes Drehrostelement
- 255: Übergangselement
- 256: Öffnungen
- 257: Rostlippen
- 258: Verbrennungsfläche

- 260: Auflageflächen der Brennkammersteine
- 261: Nut
- 262: Vorsprung
- 263: Ring
- 264: Halterungssteine
- 265: Schräge der Halterungssteine

- 3: Wärmetauscher

- 31: Wartungsöffnung für Wärmetauscher
- 32: Kesselrohre
- 33: Kesselrohreintritt
- 34: Wendekammereintritt
- 35: Wendekammer
- 36: Federturbulator
- 37: Band- oder Spiralturbulator
- 38: Wärmetauschmedium

- 4: Filtereinrichtung
- 41: Abgasausgang
- 42: Elektrodenversorgungsleitung
- 43: Elektrodenhalterung
- 44: Filtereintritt
- 45: Elektrode
- 46: Elektrodenisolation
- 47: Filteraustritt
- 48: Käfig

- 5: Rezirkulationseinrichtung
- 51, 54: Rezirkulationskanal / Rezirkulationskanäle
- 52: Klappen
- 53: Rezirkulationseintritt

- 6: Brennstoffzufuhr
- 61: Zellradschleuse
- 62: Achse der Brennstoffzufuhr
- 63: Übersetzungsmechanik
- 64: Brennstoffzufuhrkanal
- 65: Brennstoffzufuhröffnung
- 66: Antriebsmotor
- 67: Brennstoff-Förderschnecke

- 7: Ascheabfuhr
- 71: Ascheaustragungsschnecke
- 72: Motor der Ascheabfuhr mit Mechanik

- 81: Lagerachsen
- 82: Drehachse
- 83: Brennstoff-Niveauklappe
- 831: Hauptfläche
- 832: Mittenachse
- 835: Oberflächenparallele

- 84: Lagerkerbe
- 85: Sensorflansch
- 86: Glutbetthöhenmessmechanik

- 9: Reinigungseinrichtung
- 91: Reinigungsantrieb
- 92: Reinigungswellen
- 93: Wellenhalterung
- 94: Fortsatz
- 95: Turbulatorhalterungen
- 951: Drehlageraufnahme
- 952: Fortsätze
- 953: Durchlässe
- 954: Ausnehmungen
- 955: Drehlagergestänge
- 96: zweiarmiger Schlaghebel
- 97: Anschlagkopf

- 211: Dämmmaterial, beispielsweise Vermiculite

- 291: Sekundärluft bzw. Rezirkulationsdüsen

- E: Einschubrichtung des Brennstoffs

- 331: Isolation am Kesselrohreintritt

- 481: Käfighalterung

## Patentansprüche

1. Biomasse-Heizanlage (1) zur Verfeuerung von Brennstoff in Form von Pellets und/oder Hackgut, aufweisend:
einen Kessel (11) mit einer Brenneinrichtung (2),
einen Wärmetauscher (3) mit einer Mehrzahl von Kesselrohren (32),
wobei die Brenneinrichtung (2) das Folgende aufweist:
eine Brennkammer (24) mit einem Drehrost (25), mit einer Primärverbrennungszone (26) und mit einer Sekundärverbrennungszone (27);
wobei die Primärverbrennungszone (26) durch den Drehrost (25) von unten umfasst ist;
wobei die Primärverbrennungszone (26) und die Sekundärverbrennungszone (27) durch eine Brennkammerdüse (203) separiert werden;
wobei die Sekundärverbrennungszone (27) der Brennkammer (24) strömungstechnisch mit einem Eintritt (33) des Wärmetauschers (3) verbunden ist;
**dadurch gekennzeichnet, dass**
die Primärverbrennungszone (26) durch eine Mehrzahl von Brennkammersteinen (29) seitlich umfasst ist und dadurch dass die Primärverbrennungszone (26) einen ovalen Horizontalquerschnitt aufweist.

2. Biomasse-Heizanlage (1) gemäß Anspruch 1, wobei
der Horizontalquerschnitt der Primärverbrennungszone (26) über eine Höhe von zumindest 100 mm zumindest annähernd gleichbleibend vorgesehen ist.

3. Biomasse-Heizanlage (1) gemäß Anspruch 1 oder 2, wobei
die Brennkammer (24) in der Sekundärverbrennungszone (27) eine Brennkammerschräge (202) aufweist, welche den Querschnitt der Sekundärverbrennungszone (27) in Richtung des Eintritts (33) des Wärmetauschers (3) verjüngt.

4. Biomasse-Heizanlage (1) gemäß einem der vorausgehenden Ansprüche, wobei
der Drehrost (25) ein erstes Drehrostelement (252), ein zweites Drehrostelement (253) und ein drittes Drehrostelement (254) aufweist, die jeweils um eine horizontal angeordnete Lagerachse (81) um zumindest 90 Grad drehbar angeordnet sind;
wobei die Drehrostelemente (252, 253, 254) eine Verbrennungsfläche (258) für den Brennstoff ausbilden;
wobei die Drehrostelemente (252, 253, 254) Öffnungen (256) für die Luft zur Verbrennung aufweisen,
wobei das erste Drehrostelement (252) und das dritte Drehrostelement (254) in ihrer Verbrennungsfläche (258) identisch ausgebildet sind.

5. Biomasse-Heizanlage (1) gemäß Anspruch 4, wobei
das zweite Drehrostelement (253) formschlüssig zwischen dem ersten Drehrostelement (252) und dem dritten Drehrostelement (254) angeordnet ist und Rostlippen (257) aufweist, die derart angeordnet sind, dass diese in Horizontallage aller drei Drehrostelemente (252, 253, 354) zumindest weitgehend dichtend an dem ersten Drehrostelement (252) und dem dritten Drehrostelement (254) anliegen.

6. Biomasse-Heizanlage (1) gemäß Anspruch 4 oder 5, wobei
der Drehrost (25) weiter eine Drehrostmechanik (23) aufweist, die derart konfiguriert ist, dass diese das dritte Drehrostelement (254) unabhängig von dem ersten Drehrostelement (252) und dem zweiten Drehrostelement (253) drehen kann, und dass diese das erste Drehrostelement (252) und das zweite Drehrostelement (253) gemeinsam miteinander und unabhängig von dem dritten Drehrostelement (254) drehen kann.

7. Biomasse-Heizanlage (1) gemäß einem der Ansprüche 4 bis 6, wobei
die Verbrennungsfläche (258) der Drehrostelemente (252, 253, 254) eine im Wesentlichen ovale oder elliptische Verbrennungsfläche (258) konfigurieren.

8. Biomasse-Heizanlage (1) gemäß einem der Ansprüche 4 bis 7, wobei
die Drehrostelemente (252, 253, 254) zueinander komplementäre und gekrümmte Seiten aufweisen,
wobei vorzugsweise das zweite Drehrostelement (253) jeweils zu dem benachbarten ersten und dritten Drehrostelement (252, 254) konkave Seiten aufweist, und vorzugsweise das erste und dritte Drehrostelement (252, 254) jeweils zu dem zweiten Drehrostelement (253) hin eine konvexe Seite aufweisen.

9. Biomasse-Heizanlage (1) gemäß einem der vorausgehenden Ansprüche, wobei die Brennkammersteine (29) einen modularen Aufbau aufweisen; und jeweils zwei weitgehend symmetrische Brennkammersteine (29) einen geschlossenen Ring bilden, um die Primärverbrennungszone (26) auszubilden; und zumindest zwei Ringe an Brennkammersteinen (29) aufeinandergestapelt angeordnet sind.

10. Biomasse-Heizanlage (1) gemäß einem der vorausgehenden Ansprüche, wobei der Wärmetauscher (3) in den Kesselrohren (32) angeordnete Spiralturbulatoren aufweist, die sich über die gesamte Länge der Kesselrohre (32) erstrecken; und der Wärmetauscher (3) in den Kesselrohren (32) angeordnete Bandturbulatoren aufweist, die sich zumindest über die halbe Länge der Kesselrohre (32) erstrecken.

11. Biomasse-Heizanlage (1) gemäß einem der vorausgehenden Ansprüche, wobei der Wärmetauscher (3) zwischen 18 und 24 Kesselrohre mit jeweils einem Durchmesser von 70 bis 85 mm und einer Wandstärke von 3 bis 4 mm aufweist.

12. Biomasse-Heizanlage (1) gemäß einem der vorausgehenden Ansprüche, wobei der Kessel (11) eine integriert angeordnete elektrostatische Filtereinrichtung (4) aufweist, die eine Elektrode (45) und einen Käfig (48) aufweist;
wobei der Kessel (11) weiter eine mechanisch betätigbare Reinigungseinrichtung (9) mit einem Schlaghebel (96) mit einem Anschlagkopf (97) aufweist;
wobei die Reinigungseinrichtung (9) derart eingerichtet ist, dass diese die Elektrode (45) an deren Ende mit dem Anschlagkopf (97) anschlagen kann, so dass eine Stoßwelle durch die Elektrode (45) und/oder Transversalschwingungen der Elektrode (45) erzeugt wird oder werden, um die Elektrode (45) von Verunreinigungen abzureinigen.

13. Biomasse-Heizanlage (1) gemäß einem der vorausgehenden Ansprüche, wobei eine in den Kessel (11) im kalten Bereich integrierte Reinigungseinrichtung (9) vorgesehen ist, die derart konfiguriert ist, dass diese die Kesselrohre (32) des Wärmetauschers (3) durch eine Auf- und Abwärtsbewegung von in den Kesselrohren (32) vorgesehenen Turbulatoren (36, 37) abreinigen kann.

14. Biomasse-Heizanlage (1) gemäß einem der vorausgehenden Ansprüche, wobei
in der Brennkammer (24) über dem Drehrost (25) eine Glutbetthöhenmessmechanik (86) angeordnet ist;
wobei die Glutbetthöhenmessmechanik (86) eine auf einer Drehachse (82) angebrachte Brennstoff-Niveauklappe (83) mit einer Hauptfläche (831) aufweist;
wobei eine Oberflächenparallele (831) der Hauptfläche (831) der Brennstoff-Niveauklappe (83) mit einem Winkel zu einer Mittenachse der Drehachse (82) von vorzugsweise größer als 20 Grad vorgesehen ist.

15. Biomasse-Heizanlage (1) gemäß einem der Ansprüche 4 bis 14, wobei
die Drehrostelemente (252, 253, 254) maximale Außenabmessungen derart aufweisen, dass diese eine Hauptachse von 288 mm +- 40 mm und eine Nebenachse von 350 mm +- 60 mm aufweisen, und wobei vorzugsweise die Primärverbrennungszone (26) über Höhe von zumindest 400 mm den gleichen Mindestquerschnitt aufweist, wie die Drehrostelemente (252, 253, 254).

## Claims

1. Biomass heating system (1) for burning fuel in the form of pellets and / or wood chips, comprising:
a boiler (11) with a combustion device (2),
a heat exchanger (3) with a plurality of boiler tubes (32),
wherein the combustion device (2) comprises the following:
a combustion chamber (24) with a rotating grate (25), with a primary combustion zone (26) and with a secondary combustion zone (27);
wherein the primary combustion zone (26) is enclosed from below by the rotating grate (25);
wherein the primary combustion zone (26) and the secondary combustion zone (27) are separated by a combustion chamber nozzle (203);
wherein the secondary combustion zone (27) of the combustion chamber (24) is fluidically connected to an inlet (33) of the heat exchanger (3);
**characterised in that**
the primary combustion zone (26) is laterally enclosed by a plurality of combustion chamber bricks (29) and **in that** the primary combustion zone (26) has an oval horizontal cross-section.

2. Biomass heating system (1) according to claim 1, wherein
the horizontal cross-section of the primary combustion zone (26) is designed to be at least approximately constant over a height of at least 100 mm.

3. Biomass heating system (1) according to claim 1 or 2, wherein
the combustion chamber (24) in the secondary combustion zone (27) has a combustion chamber slope (202) that tapers the cross section of the secondary combustion zone (27) in the direction of the inlet (33) of the heat exchanger (3).

4. Biomass heating system (1) according to one of the preceding claims,
wherein the rotary grate (25) has a first rotary grate element (252), a second rotary grate element (253) and a third rotary grate element (254), each being designed to be able to rotate by at least 90 degrees around a horizontally arranged bearing axis (81);
wherein the rotating grate elements (252, 253, 254) form a combustion surface (258) for the fuel;
wherein the rotating grate elements (252, 253, 254) possess openings (256) for the air for combustion,
wherein the first rotating grate element (252) and the third rotating grate element (254) have an identically shaped combustion surface (258).

5. Biomass heating system (1) according to claim 4, wherein
the second rotating grate element (253) is positively arranged between the first rotating grate element (252) and the third rotating grate element (254) and has grate lips (257) that are arranged such that in a horizontal position of all three rotating grate elements (252, 253, 354) they bear at least largely sealingly against the first rotating grate element (252) and the third rotating grate element (254).

6. Biomass heating system (1) according to claim 4 or 5,
wherein the rotary grate (25) further comprises a rotary grate mechanism (23) which is configured in such a way that it can rotate the third rotary grate element (254) independently of the first rotary grate element (252) and the second rotary grate element (253), and that it can rotate the first rotating grate element (252) and the second rotating grate element (253) together with one another and independently of the third rotating grate element (254).

7. Biomass heating system (1) according to one of claims 4 to 6, wherein
the combustion surface (258) of the rotating grate elements (252, 253, 254) configure a substantially oval or elliptical combustion surface (258).

8. Biomass heating system (1) according to one of claims 4 to 7, wherein
the rotating grate elements (252, 253, 254) have mutually complementary and curved sides,
wherein preferably the second rotating grate element (253) has concave sides to each of the adjacent first and third rotating grate element (252, 254), and preferably the first and third rotating grate elements (252, 254) each have a convex side towards the second rotating grate element (253).

9. Biomass heating system (1) according to one of the preceding claims, wherein the combustion chamber bricks (29) have a modular structure; and
each two largely symmetrical combustion chamber bricks (29) form a closed ring so as to form the primary combustion zone (26); and
at least two rings of combustion chamber bricks (29) are stacked one on top of the other.

10. Biomass heating system (1) according to one of the preceding claims, wherein the heat exchanger (3) has spiral turbulators arranged in the boiler tubes (32) which extend over the entire length of the boiler tubes (32); and
the heat exchanger (3) has belt turbulators arranged in the boiler tubes (32) which extend over at least half the length of the boiler tubes (32).

11. Biomass heating system (1) according to one of the preceding claims, wherein the heat exchanger (3) has between 18 and 24 boiler tubes, each with a diameter of 70 to 85 mm and a wall thickness of 3 to 4 mm.

12. Biomass heating system (1) according to one of the preceding claims, wherein the boiler (11) has an integrated electrostatic filter device (4) that has an electrode (45) and a cage (48);
wherein the boiler (11) additionally has a mechanically operated cleaning device (9) with a rocking lever (96) with a stop head (97);
wherein the cleaning device (9) is designed such that it can strike the electrode (45) at its end with the stop head (97) so that a shock wave is generated through the electrode (45) and/or transverse vibrations of the electrode (45) are generated in order to clean the electrode (45) of contaminants.

13. Biomass heating system (1) according to one of the preceding claims, wherein a cleaning device (9) is integrated into the boiler (11) in the cold area, and which is configured in such a way that it can clean the boiler tubes (32) of the heat exchanger (3) by an upward and downward movement of the turbulators (36, 37) provided in the boiler tubes (32).

14. Biomass heating system (1) according to one of the preceding claims, wherein a glow bed height measuring mechanism (86) is arranged in the combustion chamber (24) above the rotating grate (25);
wherein the glow bed height measuring mechanism (86) has a fuel level flap (83) with a main surface (831);
wherein a surface parallel (831) of the main surface (831) of the fuel level flap (83) is provided at an angle of preferably greater than 20 degrees to a central axis of the axis of rotation (82).

15. Biomass heating system (1) according to one of claims 4 to 14, wherein
the rotating grate elements (252, 253, 254) have maximum external dimensions, such that they have a main axis of 288 mm +/- 40 mm and a minor axis of 350 mm +/- 60 mm, and wherein the primary combustion zone (26) over a height of at least 400 mm preferably has the same minimum cross-section as the rotating grate elements (252, 253, 254).

## Revendications

1. Installation de chauffage à biomasse (1) pour brûler du combustible sous la forme de pellets et/ou de produits hachés, comprenant :
- une cuve (11) avec une installation de brûleur (2),
- un échangeur de chaleur (3) avec plusieurs tubes de chaleur (32),
- l'installation de combustion (2) ayant les caractéristiques suivantes :
- une chambre de combustion (24) avec une grille rotative (25), une zone de combustion primaire (26) et une zone de combustion secondaire (27),
- la zone de combustion primaire (26) étant entourée par en dessous par la grille rotative (25),
- la zone de combustion primaire (26) et la zone de combustion secondaire (27) étant séparées par une buse de chambre de combustion (203),
- la zone de combustion secondaire (27) de la chambre de combustion (24) est reliée par une liaison fluidique avec l'entrée (33) de l'échangeur de chaleur (3),
**caractérisée en ce que**
la zone de combustion primaire (26) est entourée latéralement par plusieurs briques de chambre de combustion (29) et **en ce que** la zone de combustion primaire (26) présente une section horizontale ovale.

2. Installation de chauffage à biomasse (1) selon la revendication 1,
dans laquelle
la section horizontale de la zone de combustion primaire (26) est au moins sensiblement identique sur une hauteur d'au moins 100 mm.

3. Installation de chauffage à biomasse (1) selon la revendication 1 ou 2,
dans laquelle
la chambre de combustion (24) présente une partie inclinée (202) dans la zone de combustion secondaire (27) qui rétrécie la section de la zone de combustion secondaire (27) en direction de l'entrée (33) de l'échangeur de chaleur (3).

4. Installation de chauffage à biomasse (1) selon l'une des revendications précédentes,
selon laquelle
la grille rotative (25) comporte un premier élément de grille pivotant (252), un second élément de grille pivotant (253) et un troisième élément de grille pivotant (254) qui sont montés pivotants sur au moins 90 degrés autour d'un axe de palier (81) horizontal,
- les éléments de grille pivotants (252, 253, 254) formant une surface de combustion (258) pour le combustible,
- les éléments de grille pivotants (252, 253, 254) ont des ouvertures (256) pour l'air dans la combustion,
- le premier élément de grille pivotant (252) et le troisième élément de grille pivotant (254) ayant surface de combustion (258) identique.

5. Installation de chauffage à biomasse (1) selon la revendication 4, selon laquelle
le second élément de grille pivotant (253) est installé par une liaison de forme entre le premier élément de grille (252) et le troisième élément de grille (254) et il comporte des lèvres de grille (257) qui sont tellement rapprochés que ceux-ci en position horizontale des trois éléments de grille pivotants (252, 253, 254) étant appliqués au moins pratiquement de façon horizontale contre le premier élément de grille (252) et le troisième élément de grille (254).

6. Installation de chauffage à biomasse (1) selon la revendication 4 ou 5,
dans laquelle
la grille pivotante (25) comporte en outre un mécanisme de grille pivotante (23) configuré pour pivoter le troisième élément de grille (254) indépendamment du premier élément de grille (252) et du second élément de grille (253) et elle peut pivoter le premier élément de grille (252) et le second élément de grille (253) en commun et indépendamment du troisième élément de grille pivotant (254).

7. Installation de chauffage à biomasse (1) selon l'une des revendications 4 à 6,
dans laquelle
la surface de combustion (258) des éléments de grille pivotants (252, 253, 254) forme une surface de combustion (258) principalement ovale ou elliptique.

8. Installation de chauffage à biomasse (1) selon l'une des revendications 4 à 7,
dans laquelle
les éléments de grille pivotants (252, 253, 254) sont complémentaires les uns aux autres et ont des côtés courbes,
- de préférence, le second élément de grille pivotant (253) ayant des côtés concaves par rapport au premier et au troisième éléments de grille pivotants (252, 254) et, de préférence, le premier et le troisième éléments de grille pivotant (252, 254) ont un côté convexe respectif par rapport au second élément de grille pivotant (253).

9. Installation de chauffage à biomasse (1) selon l'une des revendications précédentes,
dans laquelle
les briques de chambre de combustion (29) ont une structure modulaire et :
- chaque fois deux briques de chambre de combustion (29) très largement symétriques constituent un anneau fermé pour former la zone de combustion primaire (26) et au moins deux anneaux de brique de chambre de combustion (29) sont empilés.

10. Installation de chauffage à biomasse (1) selon l'une des revendications précédentes,
dans laquelle
- l'échangeur de chaleur (3) comporte des éléments de mise en turbulence en spirale dans les tubes de chaudière (32) et qui s'étendent sur toute la longueur des tubes de chaudière (32), et
- l'échangeur de chaleur (3) comporte des turbulateurs en ruban installés dans les tubes de chaudière (32) et qui s'étendent au moins sur plus de la moitié de la longueur des tubes de chaudière (32).

11. Installation de chauffage à biomasse (1) selon l'une des revendications précédentes,
selon laquelle
l'échangeur de chaleur (3) comprend entre 18 et 24 tubes de chaudière ayant chacun un diamètre de 70-85 mm et une épaisseur de paroi de 3 à 4 mm.

12. Installation de chauffage à biomasse (1) selon l'une des revendications précédentes,
dans laquelle
la chaudière (11) comporte une installation de filtre (4) électrostatique intégrée, ayant une électrode (45) et une cage (48),
- la chaudière (11) ayant en outre une installation de nettoyage (9) actionnée mécaniquement munie d'un levier de battage (96) avec une tête de marteau (97),
- l'installation de nettoyage (9) étant conçue pour frapper contre l'électrode (45) à son extrémité avec la tête de marteau (97) pour générer une onde de choc dans l'électrode (45) et/ou les oscillations transversales dans l'électrode (45) et nettoyer l'électrode (45) pour enlever les saletés.

13. Installation de chauffage par biomasse (1) selon l'une des revendications précédentes,
selon laquelle
une installation de nettoyage (9) est prévue dans la zone froide de la chaudière (11), cette installation étant configurée pour nettoyer les tubes (32), de l'échangeur de chaleur (3) par un mouvement ascendant et descendant dans les turbulateurs (36, 37) dans les tubes (32).

14. Installation de chauffage à biomasse (1) selon l'une des revendications précédentes,
dans laquelle
au-dessus de la grille (25) la chambre de combustion (24) comporte, un mécanisme de mesure de la hauteur du lit incandescent (86),
ce mécanisme de mesure de la hauteur du lit incandescent (86) ayant un volet de niveau de combustible (83) installé sur un axe de rotation (82) et ayant une surface principale (831),
la parallèle à la surface principale (831) du volet de niveau de combustible (83) étant prévu pour faire un angle par rapport à l'axe de rotation (82) qui est de préférence supérieur à 20 degrés.

15. Installation de chauffage à biomasse (1) selon l'une des revendications 4 à 14,
dans laquelle
les éléments de grille pivotants (252, 253, 254) ont des dimensions maximales de façon à avoir un axe principal de 288 mm ±40 mm et un axe secondaire de 350 mm ± 60 mm et ainsi de préférence que la zone de combustion primaire (26) présente sur la hauteur d'au moins 400 mm, la même section minimale que les des éléments de grille pivotants (252, 253, 254).
